# EUROPEAN PATENT APPLICATION

(11) **EP 4 608 004 A1**
(43) Date of publication of application: **27.08.2025**
(21) Application number: 22965499.1
(22) Date of filing: 16.11.2022
(51) Int. Cl.: H04W 28/24

(54) **WIRELESS COMMUNICATION METHOD, NETWORK ELEMENT, AND APPARATUS**

(71) Applicant: GUANGDONG OPPO MOBILE TELECOMMUNICATIONS CORP., LTD., Dongguan, Guangdong 523860 (CN)
(72) Inventor: CHEN, Jingran, Dongguan, Guangdong 523860 (CN)
(74) Representative: RGTH
(86) International application number: PCT/CN2022/132364
(87) International publication number: WO 2024/103315

(57) **Abstract**

A wireless communication method, a network element, and an apparatus are provided. The wireless communication method includes: transmitting, by a first network element, first information to a second network element, where the first information is associated with first QoS, and the first QoS corresponds to a first group of terminal devices. According to embodiments of this application, the first QoS corresponding to the first group of terminal devices is introduced, such that a network is able to ensure overall QoS for a group of terminal devices based on the first QoS. In addition, the introduction of the first QoS helps a network to achieve flexible resource scheduling across terminal devices and QoS flows, based on differences in communication quality and computational capabilities of different nodes within the first group of terminal devices.

## Description

### TECHNICAL FIELD

This application relates to the field of communications technologies, and more specifically, to a wireless communication method, a network element, and an apparatus.

### BACKGROUND

In related technologies, a quality of service (quality of service, QoS) flow is designed for a single terminal device, and a network may allocate a resource for a QoS flow of each terminal device to ensure transmission quality of the terminal device. However, for a scenario of group services, the network is required to ensure overall QoS for a group of nodes (for example, a group of terminal devices). Therefore, how to ensure overall transmission quality of a group of nodes is an urgent problem to be resolved.

### SUMMARY

This application provides a wireless communication method, a network element, and an apparatus. The following describes the aspects related to this application.

According to a first aspect, there is provided a wireless communication method. The wireless communication method includes: transmitting, by a first network element, first information to a second network element, where the first information is associated with first QoS, and the first QoS corresponds to a first group of terminal devices.

According to a second aspect, there is provided a wireless communication method. The wireless communication method includes: receiving, by a second network element, first information transmitted by a first network element, where the first information is associated with first QoS, and the first QoS corresponds to a first group of terminal devices.

According to a third aspect, there is provided a network element. The network element is a first network element, and the first network element includes: a first transmitting module, configured to transmit first information to a second network element, where the first information is associated with first QoS, and the first QoS corresponds to a first group of terminal devices.

According to a fourth aspect, there is provided a network element. The network element is a second network element, and the second network element includes: a receiving module, configured to receive first information transmitted by a first network element, where the first information is associated with first QoS, and the first QoS corresponds to a first group of terminal devices.

According to a fifth aspect, there is provided a network element. The network element is a first network element, and the first network element includes a processor, a memory, and a communications interface. The memory is configured to store one or more computer programs, and the processor is configured to invoke the computer program in the memory, to cause the first network element to execute some or all of the steps in the method according to the first aspect.

According to a sixth aspect, there is provided a network element. The network element is a second network element, and the second network element includes a processor, a memory, and a communications interface. The memory is configured to store one or more computer programs, and the processor is configured to invoke the computer program in the memory, to cause the second network element to execute some or all of the steps in the method according to the second aspect.

According to a seventh aspect, an embodiment of this application provides a communications system, where the system includes the foregoing first network element and/or the foregoing second network element. In another possible design, the system may further include another device that interacts with the first network element or the second network element in the solutions provided in embodiments of this application.

According to an eighth aspect, an embodiment of this application provides a computer-readable storage medium. The computer-readable storage medium stores a computer program, and the computer program causes a first network element and/or a second network element to execute some or all of the steps in the methods according to the foregoing aspects.

According to a ninth aspect, an embodiment of this application provides a computer program product. The computer program product includes a non-transitory computer-readable storage medium that stores a computer program, and the computer program is operable to cause a first network element and/or a second network element to execute some or all of the steps in the methods according to the foregoing aspects. In some implementations, the computer program product may be a software installation package.

According to a tenth aspect, an embodiment of this application provides a chip. The chip includes a memory and a processor. The processor may invoke a computer program from the memory and run the computer program, to implement some or all of the steps described in the method according to the foregoing aspects.

According to embodiments of this application, a first QoS corresponding to a first group of terminal devices (that is, a group of nodes) is introduced, such that a network is able to ensure overall QoS for the first group of terminal devices based on the first QoS. In addition, introduction of the first QoS helps a network to achieve flexible resource scheduling across terminal devices and QoS flows, based on differences in communication quality and computational capabilities of different nodes within the first group of terminal devices.

### BRIEF DESCRIPTION OF DRAWINGS

FIG. 1 is an example diagram of a system architecture of a wireless communications system to which embodiments of this application are applicable.
FIG. 2 is a schematic diagram of end-to-end QoS control of a QoS flow on a user plane and a mapping relationship of the QoS flow, according to an embodiment of this application.
FIG. 3 is a schematic flowchart of a session establishment process according to an embodiment of this application.
FIG. 4 is an example diagram of an application scenario to which embodiments of this application are applicable.
FIG. 5 is a schematic flowchart of a wireless communication method according to an embodiment of this application.
FIG. 6 is a schematic flowchart of a wireless communication method according to another embodiment of this application.
FIG. 7 is a schematic flowchart of a wireless communication method according to still another embodiment of this application.
FIG. 8 is a schematic flowchart of a wireless communication method according to still another embodiment of this application.
FIG. 9 is a schematic flowchart of a wireless communication method according to still another embodiment of this application.
FIG. 10 is a schematic flowchart of a wireless communication method according to still another embodiment of this application.
FIG. 11 is a schematic flowchart of a wireless communication method according to still another embodiment of this application.
FIG. 12 is a schematic structural diagram of a network element according to an embodiment of this application.
FIG. 13 is a schematic structural diagram of a network element according to another embodiment of this application.
FIG. 14 is a schematic structural diagram of a communications apparatus according to an embodiment of this application.

### DESCRIPTION OF EMBODIMENTS

### Communications system architecture

The technical solutions in embodiments of this application may be applied to various communications systems, for example, a global system for mobile communications (global system of mobile communication, GSM), a code-division multiple access (code division multiple access, CDMA) system, a wideband code-division multiple access ( wideband code division multiple access, WCDMA) system, general packet radio service (general packet radio service, GPRS), a long-term evolution (long term evolution, LTE) system, an advanced long-term evolution (advanced long term evolution, LTE-A) system, an LTE frequency division duplex (frequency division duplex, FDD) system, an LTE time division duplex (time division duplex, TDD) system, a new radio (new radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial networks (non-terrestrial networks, NTN) system, a terrestrial networks (terrestrial networks, TN) system, a universal mobile telecommunications system (universal mobile telecommunication system, UMTS), a wireless local area networks (wireless local area networks, WLAN) system, a wireless fidelity (wireless fidelity, WIFI) system, and a 5th-generation (5th-generation, 5G) system. The technical solutions provided in this application may be further applied to another communications system, such as a future communications system, for example, a 6th generation mobile communications system, for another example, a satellite communication system.

Generally, a quantity of connections supported by a conventional communications system is limited, and is also easy to implement. However, with development of communication technologies, a mobile communications system not only supports conventional communication, but also supports, for example, device-to-device (device to device, D2D) communication, machine-to-machine (machine to machine, M2M) communication, machine type communication (machine type communication, MTC), vehicle-to-vehicle (vehicle to vehicle, V2V) communication, or vehicle to everything (vehicle to everything, V2X) communication. Embodiments of this application may also be applied to these communications systems.

The communications system in embodiments of this application may be applied to a carrier aggregation (carrier aggregation, CA) scenario, a dual connectivity (dual connectivity, DC) scenario, or a standalone (standalone, SA) networking scenario.

The communications system in embodiments of this application may be applied to an unlicensed spectrum, and the unlicensed spectrum may also be considered as a shared spectrum. Alternatively, the communications system in embodiments of this application may be applied to a licensed spectrum, and the licensed spectrum may also be considered as a dedicated spectrum.

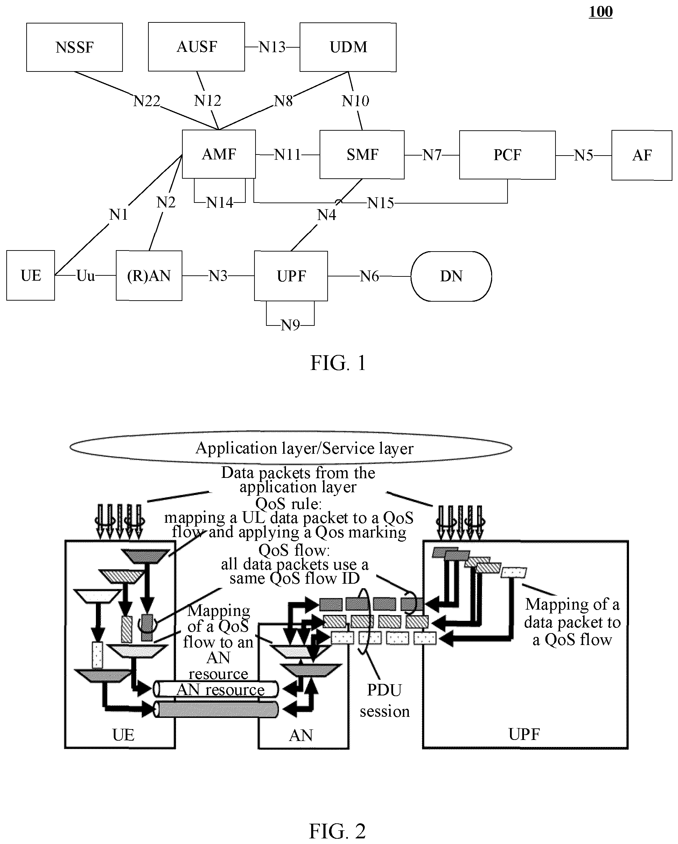

FIG. 1 is an example diagram of a system architecture of a wireless communications system 100 to which embodiments of this application are applicable. For example, the communications system is a 5G system architecture. The wireless communications system 100 may include a plurality of network elements, such as a terminal device, an access network (access network, AN) device, a user plane function (user plane function, UPF) network element, an access and mobility management function (access and mobility management function, AMF) network element, a session management function (session management function, SMF) network element, a policy control function (policy control function, PCF) network element, and an application function (application function, AF) network element. The wireless communications system 100 may further include a data network (data network, DN), or the like.

An exemplary explanation is provided below for the respective functions of parts or network elements involved in the wireless communications system 100 within a 5G network.

Terminal device: The terminal device may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a vehicle device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like.

Access network device: The access network device may be configured to provide a network access function for an authorized terminal device in a specific area, and can use transmission channels of different quality according to a level, a service requirement, and the like of the terminal device. The access network device can manage a wireless resource, and provide an access service for the terminal device, so as to implement forwarding of a control signal and data between the terminal device and a core network.

The access network device may be a device in a wireless network. The access network device may also be referred to as a radio access network (radio access network, RAN) device or a network device. For example, the access network device may be a base station. The access network device in embodiments of this application may refer to a radio access network (radio access network, RAN) node (or device) that connects the terminal device to a wireless network. The base station may broadly cover various names in the following, or may be replaced with a name in the following, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multi-standard radio (MSR) node, a home base station, a network controller, an access node, a wireless node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communications, a network-side device in a 6G network, a device that functions as a base station in a future communications system, or the like. The base station may support networks of a same access technology or different access technologies. A specific technology and a specific device configuration used by the access network device are not limited in embodiments of this application.

The base station may be stationary, or may be mobile. For example, a helicopter or an unmanned aerial vehicle may be configured to function as a mobile base station, and one or more cells may move depending on a location of the mobile base station. In another example, a helicopter or an unmanned aerial vehicle may be configured to serve as a device in communication with another base station.

In some deployments, the access network device in embodiments of this application may refer to a CU or a DU, or the access network device includes a CU and a DU. The gNB may further include an AAU.

The access network device and the terminal device may be deployed on land, including being deployed indoors or outdoors, being handheld, or vehicle-mounted, may be deployed on a water surface, or may be deployed on a plane, a balloon, or a satellite in the air. In embodiments of this application, a scenario in which the access network device and the terminal device are located is not limited.

UPF network element: The UPF is a user plane function in the core network, and may be responsible for forwarding and receiving of user data (for example, a service data flow) in the terminal device. For example, the UPF may receive user data from the DN, and transmit the user data to the terminal device through the access network device. Alternatively, the UPF may receive user data from the terminal device through the access network device, and then forward the user data to the DN. A transmission resource and a scheduling function in the UPF that provide a service for the terminal device are managed and controlled by the SMF. In some embodiments, the UPF may be divided into an intermediate UPF (intermediate-UPF, I-UPF) and an anchor UPF (anchor-UPF, A-UPF). The I-UPF is connected to an access network, the A-UPF is a UPF of a session anchor, and the A-UPF may also be referred to as a PDU session anchor (PDU session anchor, PSA).

AMF network element: The AMF is a mobility management function in the core network, and may be configured to implement functions, for example, lawful interception or access authorization (or authentication), of a mobility management network element (mobility management entity, MME) except for session management. In some embodiments, in addition to performing mobility management on the terminal device, the AMF may be further responsible for forwarding of a message related to session management between the terminal device and the SMF.

SMF network element: The SMF is a session management function in the core network, and is mainly responsible for session management, internet protocol (internet protocol, IP) address allocation and management of the terminal device, selection of a manageable user plane function, policy control, a termination point of a charging function interface, downlink data notification, and configuration of routing information for a user plane function.

PCF network element: The PCF is a policy management function in the core network, and may be responsible for formulation of policies related to mobility management, session management, charging, and the like of the terminal device. Specifically, the PCF may provide policy rule information and the like for a functional network element (for example, the AMF network element or the SMF network element) on a control plane, so as to manage and control mobility management, session management, and the like of the terminal device.

AF network element: The AF mainly supports interaction with a 3rd generation partnership project (3rd generation partnership project, 3GPP) core network to provide services, for example, affecting a data routing decision, a policy control function, or providing a network side with some services of a third party. In other words, the AF may be mainly configured to transfer a requirement of an application side on the network side. In some embodiments, the AF may be an internal application of an operator, such as an IP multimedia subsystem (IP multimedia subsystem, IMS) technology. In some embodiments, the AF may be understood as a third-party server, for example, an application server on an internet, which provides related service information, including providing the PCF with quality of service (quality of service, QoS) requirement information corresponding to a service, and transmitting user plane data information of a service to an A-UPF. In some embodiments, the AF may also be a content provider (content provider, CP). In some embodiments, if the AF is an internal AF of an operator, and is within a same trusted domain as other network functions (network function, NF), the AF may directly interact with and access other NFs. If the AF is not within the trusted domain, the AF is required to access other NFs through other network elements (for example, an NEF network element mentioned below).

DN: The DN refers to a network that may be used to provide transmission data. The DN may be a private network such as a local area network, may be an external network that is not managed and controlled by an operator, such as the Internet (internet), or may be a special-purpose network deployed by operators altogether, such as a network providing an IMS service.

It should be understood that the foregoing network elements in the core network may also be referred to as functional entities, which is not limited in this application. For example, the UPF network element may also be referred to as a UPF entity, and the AMF network element may also be referred to as an AMF entity. It should also be understood that in some embodiments, the xx network element or the xx functional entity may also be directly referred to as the xx, for example, the UPF network element (or the UPF entity) may be referred to as the UPF, and the AMF network element (or the AMF entity) may be referred to as the AMF. For ease of description, the xx (for example, the UPF or the AMF) mentioned in embodiments of this application may refer to the xx network element or the xx entity. Details are not described again below.

Optionally, the wireless communications system 100 may further include other network elements such as a unified data management (unified data management, UDM) network element, an authentication server function (authentication server function, AUSF) network element, a network slice selection function (network slice selection function, NSSF) network element, and a network exposure function (network exposure function, NEF) network element, which is not limited in embodiments of this application.

The UDM network element is a subscription database in the core network, and may be used for functions such as generating and storing subscription data of a user in a network (for example, a 5G network) and managing authentication data. The UDM network element may support interaction with an external third-party server. The AUSF network element may be configured to: receive an identity authentication request for the terminal device from the AMF, and request a key from the UDM, and then forward the delivered key to the AMF for authentication processing. The NSSF network element may be used for network slice selection. The NEF network element may be responsible for managing exposure of network data from 5G network elements. External untrusted applications are required to access data internal to the core network through the NEF, to ensure security of the 3GPP network. In some embodiments, the NEF network element may further provide functions such as QoS capability exposure for external applications, event subscription, and AF request distribution.

In the wireless communications system 100 shown in FIG. 1, various parts or network elements may communicate with each other by using interfaces. For example, the terminal device may perform an access stratum connection to the AN by using a Uu interface, and exchange an access stratum message and perform wireless data transmission. The terminal device may perform a non-access stratum (none access stratum, NAS) connection to the AMF by using an N1 interface, and exchange a NAS message. The AN may be connected to the AMF by using an N2 interface, to transfer radio bearer control information from the core network side to the AN. The UPF may perform data transmission with the AN by using an N3 interface, and perform data transmission with the DN by using an N6 interface, and the like. For interfaces used to connect other parts or network elements, reference may be made to FIG. 1. Details are not described herein again.

It should be understood that the terminal device, the access network device, the SMF, the PCF, and other network elements shown in FIG. 1 are merely names, which do not constitute a limitation on the devices. In a 5G network and another network in the future, network elements corresponding to the terminal device, the access network device, the SMF, the PCF, and the like may also have other names. This is not specifically limited in embodiments of the application.

It should be understood that, the foregoing communications system 100 is described using a 5G system as an example. Certainly, this application is also applicable to another 3GPP communications system, for example, a 4G communications system, or a future 3GPP communications system, which is not limited in embodiments of this application.

It should be understood that all or some of functions of the communications device in this application may alternatively be implemented by software functions running on hardware, or by virtualization functions instantiated on a platform (for example, a cloud platform).

It should be understood that the system architecture described in embodiments of this application is for the purpose of describing the technical solutions in embodiments of this application more clearly, and does not constitute any limitation on the technical solutions provided in embodiments of this application. It may be learned by a person skilled in the art that, with evolution of a network architecture, embodiments of this application may also be applicable to similar technical problems.

### QoS flow (QoS flow)

To implement higher-rate experience and higher-bandwidth access capabilities, and ultra-reliable information exchange with a lower delay, in some communications systems (for example, an NR system), a concept of QoS flow is introduced. A QoS flow is the granularity of QoS differentiation in a protocol data unit (protocol data unit, PDU) session, that is, a difference between two PDU sessions may lie in that QoS flows of the two PDU sessions are different.

A QoS flow identifier (QoS flow identifier, QFI) may be used to identify a QoS flow. For example, one QFI may be used to identify one QoS flow. User plane data sharing the same QFI in a PDU session may receive identical forwarding treatment (such as same scheduling and a same admission threshold).

Data may be bound to a corresponding QoS flow for transmission. In a same PDU session, there may be a plurality of QoS flows, to support different QoS requirements of different types of data transmission. For example, video, voice, and web browsing services may need to use different QoS flows.

FIG. 2 is a schematic diagram of end-to-end QoS control of a QoS flow on a user plane and a mapping relationship of the QoS flow, according to an embodiment of this application. As shown in FIG. 2, the PCF may specify a policy charging control (policy charging control, PCC) rule (PCC rule) based on information collected from various network elements and configuration of the PCF, and transmit the PCC rule to the SMF. The SMF may provide, based on the PCC rule, the following three types of information to the AN, the terminal device, and the UPF, respectively, so as to implement end-to-end QoS control.

Information 1: a QoS profile (QoS profile) provided by the SMF to the AN. The QoS profile may include the following QoS parameters of the QoS flow: a 5G quality of service identifier (5G QoS identifier, 5QI), an allocation and retention priority (allocation and retention priority, ARP), a bit rate requirement, and other information.

Information 2: one or more QoS rules (QoS rule) provided by the SMF to the terminal device, where the one or more QoS rules are mainly used for uplink data detection. In some embodiments, each QoS rule may correspond to one QFI.

Information 3: one or more uplink and downlink packet detection rules (packet detection rule, PDR), and a corresponding QoS execution rule , as provided by the SMF to the UPF.

In a downlink direction, the UPF performs matching on received data packets according to descending order of priorities of downlink packet filter sets in a PDR transmitted by the SMF. If a matched downlink PDR is found, the UPF encapsulates, based on a matching result, a corresponding QFI into a header. Further, the AN may map a data packet to a corresponding data radio bearer (data radio bearer, DRB) based on the QFI. If no matched downlink PDR is found, the UPF may discard the data packet.

In an uplink direction, the terminal device performs, according to descending order of priorities of uplink packet filter sets in a QoS rule, matching on data packets to be transmitted. If the matching is successful, the terminal device binds the uplink packet to a QoS flow by using a QFI in a corresponding QoS rule, and may further bind the QoS flow to a corresponding DRB. If the matching fails, the terminal device may discard the data packet. However, the terminal device has a default QoS rule, and a packet filter set by the default QoS rule may allow all data packets, with the purpose of matching all packets and preventing loss of uplink packets.

As an important standard for measuring communication quality, a QoS parameter may generally be used to represent a feature of a QoS flow. QoS flows are mainly classified into a guaranteed bit rate (guaranteed bit rate, GBR) QoS flow and a non-GBR QoS flow. For a GBR QoS flow, it is required for a network to reserve a resource so as to ensure a bandwidth.

QoS parameters mainly include 5QI, ARP, reflective QoS attribute (reflective QoS attribute, RQA), guaranteed flow bit rate (guaranteed flow bit rate, GFBR), maximum flow bit rate (maximum flow bit rate, MFBR), notification control, aggregate maximum bit rate (aggregate maximum bit rate, AMBR), and the like. The parameters are described below.

5QI may be understood as a scalar directed to various QoS characteristic values, and may be classified into three types: standardized 5QI, pre-configured 5QI, and dynamically allocated 5QI. For the dynamically allocated 5QI, when providing a QoS configuration of a QoS flow (or a QoS flow configuration of a QoS flow) to an access network device, a core network not only includes the 5QI in the QoS configuration, but also includes a complete set of QoS characteristic values corresponding to the 5QI. For the standardized 5QI and the pre-configured 5QI, the core network only needs to provide the 5QI, and the access network device may then resolve the set of QoS characteristic values corresponding to the 5QI. In addition, for a standardized or pre-configured 5QI, the core network is also allowed to provide one or more QoS characteristic values that are different from the standardized or pre-configured ones, so as to modify corresponding standardized or pre-configured QoS characteristic values. The standardized 5QI is mainly used for relatively general and frequently used services. The dynamically allocated 5QI is mainly used for services that are less common and cannot be satisfied by the standardized 5QI.

ARP may specifically include three types of information: a priority level, a resource preemption capability, and whether resource preemption is allowed. The information is used to determine whether establishment, modification, or handover of a QoS flow is allowed when resources are limited. ARP is generally used for admission control of GBR-type QoS flows. In some embodiments, ARP may also be used to preempt a resource of an existing QoS flow when resources are limited. For example, a high-priority QoS flow may preempt a resource of a low-priority QoS flow.

RQA may be used to indicate that QoS flows carried on some service data flows (service data flow, SDF) are subjected to reflective QoS. In some embodiments, a service data flow may also be referred to as a business data flow.

GFBR may be used to indicate a guaranteed bit rate for a QoS flow within an average time window, with an access network device ensuring reservation of sufficient resources. MFBR may be used to indicate a maximum bit rate allowed for transmission of a QoS flow.

QoS notification control may be used to indicate that when an access network device is unable to ensure a GFBR of a QoS flow, the access network device persists in maintaining a QoS flow and notifies a core network that a QoS requirement cannot be ensured, and NG-RAN attempts to re-establish the guarantee and notifies the SMF that the QoS requirement is being re-guaranteed.

Session-AMBR (Session-AMBR) controls a total bit rate of all non-GBR types of QoS flows for a PDU session. UE-AMBR (UE-AMBR) controls a total bit rate of all non-GBR types of QoS flows for a terminal device.

### PDU session establishment procedure

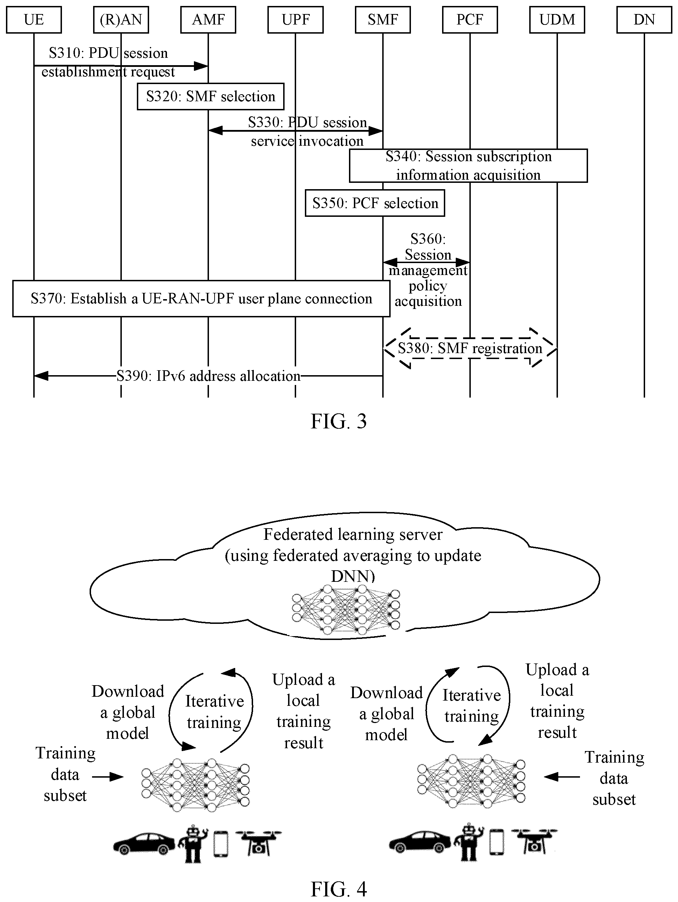

Under an existing mechanism, a terminal device may trigger a PDU session establishment procedure to create a new PDU session for the terminal device. The following describes a PDU session establishment process with reference to FIG. 3.

FIG. 3 is a schematic flowchart of a PDU session establishment process according to an embodiment of this application. As shown in FIG. 3, the PDU session establishment process may include step S310 to step S390.

In step S310, a terminal device transmits a session establishment request message to an AMF. The session establishment request message may include parameters such as a session identifier, a session type (for example, initial session establishment, evolved packet system (evolved packet system, EPS) to 5G system (5G system, 5GS) handover, non-3GPP to 3GPP handover, emergency service request, etc.), session and service continuity mode (session and service continuity mode, SSC mode), data network name (data network name, DNN), and single-network slice selection assistance information (single-network slice selection assistance information, S-NSSAI).

In step S320, the AMF selects an appropriate SMF based on a DNN, an S-NSSAI, and subscription data.

In step S330, the AMF triggers session establishment by invoking a session service for the selected SMF.

In step S340, the SMF acquires session subscription data from the UDM, such as an SSC mode allowed by a user, a session type, and a session-AMBR for a session.

In step S350, the SMF selects a PCF for the session.

In step S360, the SMF establishes a policy connection to the PCF and acquires a PCC rule.

In step S370, the SMF establishes user plane connections between the terminal device, the AN, and the UPF, which is mainly core network tunnel information (CN tunnel info) allocation, and access network tunnel information (AN tunnel info) acquisition. In addition, the SMF may further transmit a session establishment accept message to the terminal device via the AMF and the AN.

In step S380, the SMF registers with the UDM, and the UDM records an SMF identifier (SMF ID) corresponding to the session.

In step S390, the SMF allocates an IPv6 prefix for the terminal device and transmits the IPv6 prefix to the terminal device via the user plane.

It may be learned from the foregoing description that, a PDU session is for implementing an end-to-end connection between the terminal device and the DN, that is, a PDU session is specific to a single terminal device (or in other words, the PDU session is at a terminal device level). However, a QoS flow is a granularity for QoS differentiation within a PDU session, that is, a QoS flow is also specific to a single terminal device. A QoS configuration transmitted by the core network to the access network device is also at a QoS flow level and corresponds to a QFI. In other words, the network may allocate resources for a QoS flow of each terminal device based on a QoS configuration to ensure transmission quality of the QoS flow. However, in scenarios involving group services (such as in a scenario of federated learning), the network is required to ensure overall QoS for a group of nodes (this group of nodes may form a group, and their corresponding services may be understood as a group service), rather than QoS of a single node. In conventional technologies, a network cannot ensure QoS for a group of nodes, and cannot implement flexible resource scheduling across terminal devices and QoS flows, based on differences in communication quality and computational capabilities of different nodes within the group.

To resolve the foregoing problems, an embodiment of this application provides a wireless communication method, a network element, and an apparatus, which can allow the network to ensure overall QoS for a group of nodes, and to implement flexible resource scheduling across terminal devices and QoS flows.

For ease of understanding, application scenarios in embodiments of this application are described below. It should be noted that, the technical solutions provided in embodiments of this application are applicable to any application scenario where communication quality of a group of nodes (for example, a first group of terminal devices described below) is required to be ensured, for example, applicable to an application scenario of federated learning (federated learning, FL).

FIG. 4 is an example diagram of an application scenario to which embodiments of this application are applicable. In some embodiments, the system architecture shown in FIG. 4 may also be referred to as a federated learning architecture. It should be understood that the application scenario shown in FIG. 4 is merely an example of a scenario to which embodiments of this application are applicable, and shall not be construed as a limitation on embodiments of this application.

As performance of cameras and sensors on mobile terminals continues to improve, an increasing number of terminal devices may collect valuable training data essential for training an artifact intelligence (artifact intelligence, AI)/machine learning (machine learning, ML) model. For many AI/ML tasks, small sample data collected by the terminal device has great significance for training a global model.

As shown in FIG. 4, an FL server 410 may aggregate local training results reported by each of terminal devices 420 (in some embodiments, the terminal devices may also be referred to as federated nodes, and the terminal devices form a group of nodes) to complete training of the global model. In each training iteration, the terminal devices 420 may use their local training data to train a global model downloaded from the FL server 410, and then report the local training results (e.g., deep neural network (deep neural network, DNN) gradients) to the FL server by using an uplink channel (e.g., a 5G uplink channel). The FL server 410 may aggregate the collected local training results and update the global model. Then, the FL server 410 may deliver the updated global model to the terminal devices 420 by using a downlink channel (for example, a 5G downlink channel), so that the terminal devices 420 perform a next round of iterative training on the updated model.

In the example shown in FIG. 4, a group of federated nodes (for example, the terminal devices 420 in FIG. 4) is required to exchange data with the FL server through a network, as the FL server is required to receive the local training results from all federated nodes for aggregation. Therefore, a federated node that reports the local training result most slowly may reduce overall training efficiency. In some cases, for example, when network resources used for federated learning are limited, there may be large differences in time when the local training results generated by the federated nodes arrive at the FL server. The FL server is required to wait for all federated nodes to report their local training results before proceeding with a next step, resulting in the network being unable to ensure that the group of nodes completes an iteration of training efficiently.

The method embodiments of this application are described below with reference to the accompanying drawings.

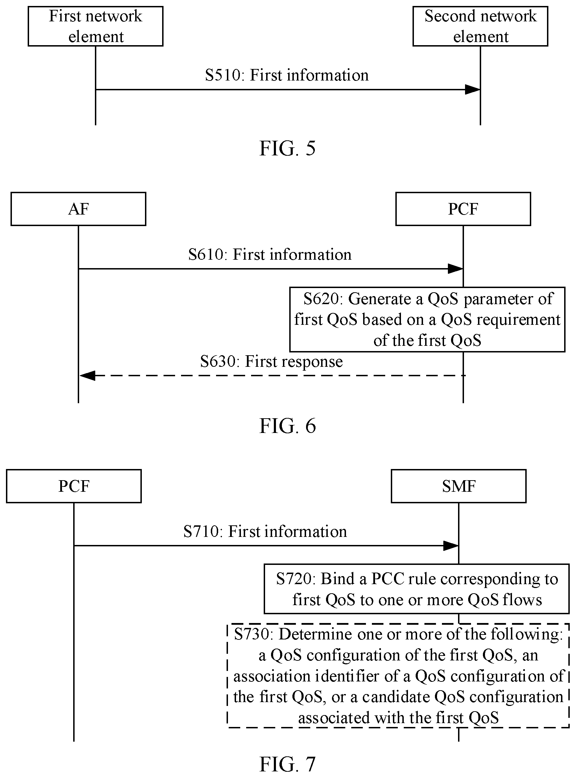

FIG. 5 is a schematic flowchart of a wireless communication method according to an embodiment of this application. The method shown in FIG. 5 is described from a perspective of interaction between a first network element and a second network element. The first network element is a transmitting end of information, and the second network element is a receiving end of information. Each of the first network element and the second network element may be any network element in a communications system architecture (for example, any existing communications system or potential communications system in the future), as long as it involves QoS of a group of nodes (e.g., a group of terminal devices), which is not limited in embodiments of this application. For example, the first network element and/or the second network element may be any network element involved in information transmission related to QoS of a group of nodes. For example, the communications system architecture is a 5G communications system. In this case, the first network element and the second network element may be any network elements in the 5G system architecture shown in FIG. 1, for example, a terminal device, an access network device, a core network network element, or an AF network element.

The method shown in FIG. 5 may include step S510. The following describes the step.

In step S510, the first network element transmits first information to a second network element.

In embodiments of this application, the first information is associated with first QoS, and the first QoS corresponds to a group of nodes.

In embodiments of this application, the first QoS corresponding to the group of nodes may be understood as that the first QoS may be used to indicate overall QoS for the group of nodes. In other words, the first QoS may be understood as group-based QoS, which may be used to indicate overall QoS for the group of nodes.

In embodiments of this application, the group of nodes may be any group of nodes, as long as the first QoS is used to indicate overall QoS for the group of nodes. For example, the group of nodes may refer to a group of nodes involved in a group service.

In some embodiments, the group of nodes may refer to a group of terminal devices. In this case, the first QoS corresponding to the group of nodes may be understood as that the first QoS corresponds to the group of terminal devices. The following description is provided using an example in which the group of terminal devices is a first group of terminal devices, where the first group of terminal devices may be any group of terminal devices.

However, embodiments of this application are not limited to this. In some embodiments, in addition to the terminal devices, the group of nodes may further include other nodes, for example, another node participating in the group service. In a specific example, the group of nodes may include both a terminal device node and another node, where both the terminal device node and the another node are required to report local information (e.g., local training results) to a network, so that the network may perform next-step processing based on the local information reported by the terminal device node and the local information reported by the another node.

In some embodiments, the group of nodes may refer to a group of nodes that need to perform a same task (e.g., a group task) simultaneously. For example, the group of nodes is a first group of terminal devices. In this case, the first group of terminal devices may refer to a group of terminal devices that is required to perform a same task. In other words, the first group of terminal devices may include one or more terminal devices for the same task.

In some embodiments, the same task may include a task of transmitting model parameters for a same model and/or a task of downloading a global model. In some embodiments, the same task includes a task of transmitting model parameters by using a same network slice and/or a task of downloading a global model.

In some embodiments, the first information being associated with the first QoS may refer to that the first information is associated with overall QoS for a group of nodes. For example, the first information may be information associated with transmission of the first QoS; or the first information may be information associated with a request for the first QoS; or the first information may be information associated with resource allocation corresponding to the first QoS.

According to embodiments of this application, the first QoS corresponding to the group of nodes is introduced, such that a network is able to ensure overall QoS for the group of nodes based on the first QoS. In addition, introduction of the first QoS helps the network to implement flexible resource scheduling across terminal devices and QoS flows, based on differences in communication quality and computational capabilities of different nodes within the group of nodes.

Taking federated learning as an example, according to the method provided in embodiments of this application, it can be ensured that, in a case in which network resources for federated learning are limited, the network may allocate fewer communication resources to a terminal device that produces results of local training quickly (e.g., a terminal device with a high local computing capability), and allocate more communication resources to a terminal device that produces results of the local training slowly. In this way, in a case in which overall network resources are limited, it can be ensured that the results from each of the terminal devices participating in federated learning reach the FL server at almost the same time, thereby effectively improving efficiency of federated learning.

In embodiments of this application, the first information may be any information associated with the first QoS. In embodiments of this application, specific content of the first information is not specifically limited. The following describes content of the first information in detail below.

In some embodiments, the first information may be used to indicate one or more of the following: information for requesting the first QoS; a QoS parameter of the first QoS; QoS configuration information for the first QoS; processing policy information for the first QoS; resource allocation information corresponding to the first QoS; or information about candidate QoS associated with the first QoS.

In some embodiments, the first information may be used to directly indicate one or more of the foregoing information, for example, the QoS parameter of the first QoS, or the QoS configuration of the first QoS. In some embodiments, the first information may be used to indirectly indicate one or more of the foregoing information. For example, the information for requesting the first QoS is indicated by association indication information for a plurality of service flows associated with the first QoS, the information for requesting the first QoS is indicated by a QoS requirement for a service flow associated with the first QoS or a QoS processing polity for a service flow associated with the first QoS, and so on.

In some embodiments, the information for requesting the first QoS may include request information for the first QoS that is transmitted by the AF to a core network network element, for example, may include identifiers of a group of nodes (for example, IDs of the first group of terminal devices), association information for a plurality of service flows (for example, association indication information for a service flow associated with the first QoS), a QoS requirement of the first QoS, a QoS processing policy for a service flow associated with the first QoS, a candidate QoS requirement associated with the first QoS, and the like.

In some embodiments, the QoS configuration information for the first QoS may include a QoS configuration of the first QoS, an identifier of a QoS configuration of the first QoS, and other information.

In some embodiments, the resource allocation information corresponding to the first QoS may be used for a network to allocate resources for a group of nodes based on the first QoS, to implement flexible scheduling and allocation of resources for the group of nodes on a network side, which facilitates the data from the group of nodes to reach a receiver (e.g., the FL server) of the data almost simultaneously.

In some embodiments, the information about candidate QoS associated with the first QoS may be used for a network to allocate resources for a group of nodes by using the information about the candidate QoS associated with the first QoS when a QoS requirement of the first QoS cannot be ensured, so as to reduce unnecessary signalling overheads.

In some embodiments, the information about candidate QoS associated with the first QoS may include at least one of the following: information about candidate QoS associated with the first QoS that is transmitted by the AF to a core network network element; information about candidate QoS associated with the first QoS that is transmitted between core network network elements; or information about candidate QoS associated with the first QoS that is transmitted by a core network network element to an access network device.

In some embodiments, the first information may include one or more of the following information: a QoS requirement of the first QoS; association indication information for a service flow associated with the first QoS; a QoS parameter of the first QoS; a QoS configuration of the first QoS; an association identifier of a QoS configuration of the first QoS; a QoS processing policy for the first QoS; a PCC rule corresponding to the first QoS; resource allocation information corresponding to the first QoS; a candidate QoS requirement associated with the first QoS; a candidate QoS parameter associated with the first QoS; or a candidate QoS configuration associated with the first QoS.

In some embodiments, the information about candidate QoS associated with the first QoS refers to that the candidate QoS is group-based candidate QoS, for example, a group-based candidate QoS requirement, a group-based candidate QoS parameter, or a group-based candidate QoS configuration.

In some embodiments, the candidate QoS requirement associated with the first QoS may be one or more in a candidate QoS requirement set associated with the first QoS. The candidate QoS parameter associated with the first QoS may be one or more in a candidate QoS parameter set associated with the first QoS. The candidate QoS configuration associated with the first QoS may be one or more in a candidate QoS configuration set associated with the first QoS.

In some embodiments, the QoS requirement of the first QoS may be used to indicate a service requirement of a group of nodes, or in other words, may be used to indicate a group-level service requirement. For example, the QoS requirement of the first QoS may be used to indicate a guaranteed bit rate, a maximum bit rate, a transmission delay, a priority, and the like required that are required for a group service.

In some embodiments, the association indication information for a service flow associated with the first QoS may be used to indicate an association relationship between a plurality of service flows associated with the first QoS, for example, may be used to indicate that the plurality of service flows belong to a same group, or may be used to indicate that a plurality of nodes corresponding to the plurality of service flows belong to a same group.

In some embodiments, a QoS processing policy for the first QoS may be used to indicate a QoS processing policy for a group of nodes. In other words, the QoS processing policy for the first QoS may be a group-level processing policy. For example, the QoS processing policy for the first QoS may be used to instruct a network to schedule resources for some or all of nodes in a group of nodes with respect to this service, thereby achieving flexible resource allocation. In some embodiments, the QoS processing policy for the first QoS may include a QoS processing policy for a service flow associated with the first QoS and/or a QoS processing policy for a QoS flow associated with the first QoS.

Currently, a QoS parameter is specific to a single terminal device. To ensure overall QoS for a group of nodes, and implement flexible resource scheduling across terminal devices and QoS flows, in embodiments of this application, the current QoS parameter may be extended, and a group-based QoS parameter (that is, a QoS parameter of the first QoS) may be defined.

In some embodiments, the QoS parameter of the first QoS may be used to indicate a QoS parameter of a group of nodes. In this way, the network may control overall QoS for the group of nodes based on the QoS parameter of the first QoS. In an implementation, the network may flexibly adjust a QoS parameter of a node in the group of nodes (for example, adjust a QoS parameter of a QoS flow of one or some of terminal devices in the first group of terminal devices) based on the QoS parameter of the first QoS, to ensure that overall QoS for the group of nodes (for example, the first group of terminal devices) can meet a requirement of the first QoS.

In some embodiments, the QoS parameter of the first QoS may include a QoS parameter for a service flow associated with the first QoS and/or a QoS parameter of a QoS flow associated with the first QoS. It should be understood that, in some embodiments, the QoS parameter of the QoS flow associated with the first QoS is obtained based on a QoS parameter for a service flow associated with the first QoS, for example, the QoS parameter of the QoS flow associated with the first QoS is generated by the SMF based on the QoS parameter for the service flow associated with the first QoS.

In some embodiments, when the first information includes the QoS parameter of the first QoS, the QoS parameter of the first QoS may be used to indicate one or more of the following information: transmission rate information corresponding to the first QoS; delay information corresponding to the first QoS; priority information corresponding to the first QoS; or resource preemption information corresponding to the first QoS.

For example, the transmission rate information corresponding to the first QoS may include, for example, a minimum transmission rate or a maximum transmission rate corresponding to the first QoS, or an average transmission rate corresponding to the first QoS. The delay information corresponding to the first QoS may include a maximum value or a minimum value of a data packet delay budget corresponding to the first QoS. The priority information corresponding to the first QoS may include the highest priority or the lowest priority of the first QoS. The resource preemption information corresponding to the first QoS may include a resource preemption capability of the first QoS, whether resource preemption is allowed for the first QoS, and other information.

In some embodiments, the QoS parameter of the first QoS may include one or more of the following parameters.

Parameter 1: a group transmission rate. The group transmission rate may be used to indicate a transmission rate for the first QoS, for example, a transmission rate ensured by a network (for example, a core network or an access network device; and a concept of "network" mentioned later may be the same, and are not detailed below for brevity) for the first QoS. The group transmission rate may be represented, for example, by a group-GBR (Group-GBR), which may be used to indicate a transmission rate (which may also be understood as a guaranteed minimum transmission rate) ensured by the network for a group of nodes performing a same task, that is, a sum of GBRs of QoS flows of all nodes in the group performing the same task. It should be understood that, the QoS flows of all nodes in the group performing the same task may include all GBR QoS flows of the nodes in the group performing the same task.

Parameter 2: a group maximum transmission rate. A group maximum transmission rate may be used to indicate a maximum transmission rate that a network allows for the first QoS. The group maximum transmission rate may be represented, for example, by a group-MBR (Group-MBR), which may be used to indicate a maximum transmission rate allowed by the network for a group of nodes performing a same task, that is, a sum of MBRs of QoS flows of all nodes in the group performing the same task. In some embodiments, the group-MBR may also be understood as a maximum value that may be reached by a sum of MBRs of QoS flows of all nodes in the group performing the same task. It should be understood that, the QoS flows of all nodes in the group performing the same task may include all GBR and/or non-GBR QoS flows of the nodes in the group performing the same task.

Parameter 3: a group packet delay budget. The group packet delay budget may be used to indicate a delay budget corresponding to the first QoS. The group packet delay budget may be represented, for example, by a group-PDB (Group-PDB), which may be used to indicate a maximum value or a minimum value of a data packet delay budget of a group of nodes performing a same task. That is, a maximum PDB or a minimum PDB among all QoS flows within the group is the group-PDB.

Parameter 4: a group allocation and retention priority. The group allocation and retention priority may be used to indicate an allocation and retention priority corresponding to the first QoS. The group allocation and retention priority may be represented, for example, by a group-ARP (Group-ARP), which may be used to indicate a maximum ARP or a minimum ARP among QoS flows related to a group of nodes performing a same task, namely the group-ARP. It should be understood that the group allocation and retention priority may be used to indicate a priority level of the first QoS, a resource preemption capability of the first QoS, whether resource preemption is allowed for the first QoS, and other information. For example, a priority of the first QoS may be represented by the highest priority or the lowest priority among all QoS flows associated with the first QoS. Alternatively, a resource preemption capability of the first QoS may be represented by the highest resource preemption capability or the lowest resource preemption capability among all QoS flows associated with the first QoS. Alternatively, if resource preemption is not allowed for at least one of all QoS flows associated with the first QoS, it indicates that resource preemption is not allowed for the first QoS. Alternatively, if resource preemption is allowed for all QoS flows associated with the first QoS, it indicates that resource preemption is allowed for the first QoS.

In some embodiments, each node in a group of nodes (e.g., each terminal device in the first group of terminal devices) may correspond to a PDU session, and the PDU session may be used to carry at least one QoS flow. In this case, the QoS parameter of the first QoS may include a sum of QoS parameters of QoS flows corresponding to a same task in the QoS flows carried by the PDU sessions corresponding to the group of nodes, such as a group-GBR and/or a group-MBR; and/or the QoS parameter of the first QoS may include a maximum value and/or a minimum value of QoS parameters of QoS flows corresponding to a same task in the QoS flows carried by the PDU sessions corresponding to the group of nodes, such as a group-PDB and/or a group-ARP.

In some embodiments, PDU sessions of different nodes in the group of nodes mentioned herein may correspond to a same access network device. In some embodiments, PDU sessions of different nodes in the group of nodes mentioned herein may correspond to different access network devices.

In some embodiments, PDU sessions of different nodes in the group of nodes mentioned herein may correspond to a same UPF. In some embodiments, PDU sessions of different nodes in the group of nodes mentioned herein may correspond to different UPFs.

In an example, PDU sessions of different nodes in the group of nodes may correspond to a same access network device and a same UPF. In another example, PDU sessions of different nodes in the group of nodes may correspond to a same access network device and different UPFs. In still another example, PDU sessions of different nodes in the group of nodes may correspond to different access network devices and a same UPF. In still another example, PDU sessions of different nodes in the group of nodes may correspond to different access network devices and different UPFs.

The first QoS and the first information in embodiments of this application are described above in detail. The following describes in detail interaction between the first network element and the second network element on a basis of the foregoing description.

FIG. 6 is a schematic flowchart of a wireless communication method according to another embodiment of this application. The method shown in FIG. 6 is described from a perspective of interaction between the AF and the PCF. In other words, FIG. 6 is depicted using an example in which the first network element is the AF, and the second network element is the PCF. The method shown in FIG. 6 may include step S610 and step S620.

In step S610, the AF transmits first information to the PCF.

In some embodiments, the first information transmitted by the AF to the PCF may include one or more of the following information: node IDs of the group of nodes associated with the first QoS (for example, IDs of a plurality of terminal devices that are required to perform federated learning), association indication information for a service flow associated with the first QoS, a QoS requirement of the first QoS, a QoS processing policy for a service flow associated with the first QoS, or a candidate QoS requirement associated with the first QoS. However, embodiments of this application are not limited to this. In some embodiments, the first information may further include other information, for example, a separate candidate QoS requirement for each node in the group of nodes.

In some embodiments, the first information may be directly transmitted by the AF to the PCF. For example, the AF is an internal AF of an operator and is within a trusted domain together with the PCF, and in this case, the AF may directly transmit the first information to the PCF.

In some embodiments, the first information may be transmitted by the AF to the PCF via another network element, for example, the first information may be transmitted by the AF to the PCF via an NEF. In an example, in a case in which the AF is not within the trusted domain, the first information may be required to be transmitted by the AF to the PCF via the NEF.

In step S620, the PCF generates a QoS parameter of the first QoS based on a QoS requirement of the first QoS.

In some embodiments, the QoS parameter of the first QoS generated by the PCF may refer to a QoS parameter for a service flow associated with the first QoS. For example, the PCF may generate one or more of the following parameters based on the QoS requirement of the first QoS: a group-GBR, a group-MBR, a group-PDB, or a group-ARP. These QoS parameters may be QoS parameters at a service flow level.

In some embodiments, the PCF may further determine, based on the QoS processing policy for the service flow associated with the first QoS, whether to update a policy for the SMF. For example, if the PCF determines that it is required to update a policy for the SMF, the PCF may initiate a policy update procedure with the SMF. A specific update procedure is described in the following, and details are not described herein.

In some embodiments, if the AF carries a separate candidate QoS requirement for each node in a group of nodes in the first information and/or a candidate QoS requirement associated with the first QoS, the PCF may generate, based on the separate candidate QoS requirement of each of the nodes and/or the candidate QoS requirement associated with the first QoS, a candidate QoS parameter at a service flow level for each node and/or a candidate QoS parameter associated with the first QoS. For example, if a separate candidate QoS requirement of each node is carried in the first information, the PCF may generate a candidate QoS parameter at a service flow level for each node. Alternatively, if a candidate QoS requirement associated with the first QoS is carried in the first information, the PCF may generate a candidate QoS parameter associated with the first QoS. Alternatively, if both a separate candidate QoS requirement of each node and a candidate QoS requirement associated with the first QoS are carried in the first information, the PCF may generate a candidate QoS parameter at a service flow level for each node and a candidate QoS parameter associated with the first QoS. It should be noted that a candidate QoS requirement associated with the first QoS and/or a candidate QoS parameter associated with the first QoS mentioned in this application may be understood as a group-based candidate QoS requirement and/or a group-based QoS parameter, that is, at least one of the candidate QoS requirement or the QoS parameter is directed to overall QoS for a group of nodes, rather than QoS for each node in a group of nodes.

In some embodiments, the method in FIG. 6 may further include step S630. In step S630, the PCF transmits a first response to the AF, where the first response may be used to indicate that a group QoS requirement requested by the AF can be guaranteed.

FIG. 7 is a schematic flowchart of a wireless communication method according to still another embodiment of this application. The method shown in FIG. 7 is described from a perspective of interaction between the PCF and an SMF. In other words, FIG. 7 is depicted using an example in which the first network element is the PCF, and the second network element is the SMF. The method shown in FIG. 7 may include step S710 and step S720.

In step S710, the PCF transmits first information to the SMF.

In some embodiments, the first information transmitted by the PCF to the SMF may include one or more of the following information: association indication information for a service flow associated with the first QoS; a QoS parameter for a service flow associated with the first QoS; a QoS processing policy for a service flow associated with the first QoS; a candidate QoS parameter for a service flow associated with the first QoS; or a PCC rule corresponding to the first QoS.

In some embodiments, the first information transmitted by the PCF to the SMF may be determined by the PCF based on the first information transmitted by the AF to the PCF.

In some embodiments, the first information transmitted by the PCF to the SMF may be first information that is transmitted by the AF to the PCF and is directly forwarded by the PCF. For example, the PCF may determine, based on association indication information for a service flow associated with the first QoS that is transmitted by the AF, association indication information for a service flow associated with the first QoS that is to be transmitted (directly forwarded) to the SMF. Alternatively, the PCF may determine, based on a QoS processing policy for a service flow associated with the first QoS that is transmitted by the AF, a QoS processing policy for a service flow associated with the first QoS that is to be transmitted to the SMF.

In some embodiments, the first information transmitted by the PCF to the SMF may be obtained through processing, by the PCF, the first information transmitted by the AF to the PCF. For example, the PCF may determine, based on a QoS requirement of the first QoS that is transmitted by the AF, a QoS parameter for a service flow associated with the first QoS, and then transmit the QoS parameter for the service flow associated with the first QoS to the SMF (after the processing). Alternatively, the PCF may determine, based on a candidate QoS requirement for the first QoS that is transmitted by the AF, a candidate QoS parameter for a service flow associated with the first QoS, and then transmit the candidate QoS parameter for the service flow associated with the first QoS to the SMF.

In some embodiments, information about a service flow associated with the first QoS, mentioned in embodiments of this application, may refer to information at a service flow level for the first QoS, and information about a QoS flow associated with the first QoS may refer to information at a QoS flow level for the first QoS. For example, a QoS parameter for a service flow associated with the first QoS, mentioned in embodiments of this application, may refer to a QoS parameter at a service flow level for the first QoS, a QoS parameter of a QoS flow associated with the first QoS may refer to a QoS parameter at a QoS flow level for the first QoS, and other related description is similar. For example, a QoS processing policy for a service flow associated with the first QoS may refer to a QoS processing policy at a service flow level for the first QoS, and a QoS processing policy for a QoS flow associated with the first QoS may refer to a QoS processing policy at a QoS flow level for the first QoS. For brevity, details are not described below.

In some embodiments, at least one of the QoS parameter for the service flow associated with the first QoS or the QoS processing policy for the service flow associated with the first QoS that are provided by the PCF to the SMF may be included in a PCC rule corresponding to the first QoS, that is, the PCF may include the two parameters in the PCC rule and transmit the same to the SMF. In this case, the PCC rule may not include a PCC rule for each node in a group of nodes.

In some embodiments, at least one of the QoS parameter for the service flow associated with the first QoS or the QoS processing policy for the service flow associated with the first QoS that are provided by the PCF to the SMF may, as a separate parameter(s), be transmitted to the SMF. In this case, the PCC rule may not include a PCC rule for each node in a group of nodes. Alternatively, the PCC rule may include a PCC rule for each node in a group of nodes, but the PCC rule for each of the nodes is not applicable to the group of nodes associated with the first QoS.

In step S720, the SMF binds the PCC rule corresponding to the first QoS to one or more QoS flows.

For the one or more QoS flows, the one or more QoS flows include a QoS parameter of a QoS flow associated with the first QoS, that is, the one or more QoS flows include a group-based QoS parameter. In some embodiments, there is no QoS parameter at a QoS flow level for each of QoS flows of the one or more QoS flows, but there is only a group QoS parameter (that is, a QoS parameter of a QoS flow associated with the first QoS) corresponding to a group of QoS flows.

In some embodiments, the SMF binds the PCC rule corresponding to the first QoS (that is, a PCC rule at a group level) to the one or more QoS flows, and the QoS flow is not bound to other services.

In some embodiments, the method shown in FIG. 7 may further include step S730. In step S730, the SMF determines one or more of the following: a QoS configuration of the first QoS; an association identifier of a QoS configuration of the first QoS; or a candidate QoS configuration associated with the first QoS.

The QoS configuration of the first QoS may be understood as a group-based QoS configuration. The QoS configuration of the first QoS may include a group-based QoS parameter.

In some embodiments, each QoS configuration may be associated with a QoS flow ID (QFI) within the group.

The association identifier of the QoS configuration of the first QoS may be used to identify a group of QoS configurations, so that an access network device may identify a group of QoS flows, and the access network device may perform group-based resource allocation based on the association identifier of the QoS configuration of the first QoS.

In some embodiments, the candidate QoS configuration associated with the first QoS may be at a group level. For example, when a candidate QoS parameter received by the SMF is a candidate QoS parameter at a group level (a candidate QoS parameter associated with the first QoS), the candidate QoS configuration associated with the first QoS may also be at a group level. In some embodiments, the candidate QoS configuration associated with the first QoS may be at a separate QoS flow level. For example, when a candidate QoS parameter received by the SMF is a QoS parameter at a node level (a candidate QoS parameter associated with each of nodes in a group of nodes), the candidate QoS configuration associated with the first QoS may be at a separate QoS flow level.

In some embodiments, the first network element may be the SMF, and the second network element may be an AMF. In this case, the first information transmitted by the SMF to the AMF may include one or more of the following information: a QoS processing policy for a QoS flow associated with the first QoS; a QoS configuration of the first QoS; an association identifier of a QoS configuration of the first QoS; or a candidate QoS configuration associated with the first QoS.

In some embodiments, the first information transmitted by the SMF to the AMF may be determined by the SMF based on the first information transmitted by the PCF to the SMF. For example, the QoS processing policy, transmitted by the SMF to the AMF, for the QoS flow associated with the first QoS, may be determined by the SMF based on a QoS processing policy, transmitted by the PCF, for a service flow associated with the first QoS, where the QoS processing policy for the service flow associated with the first QoS may be determined by the PCF based on a QoS processing policy, transmitted by the AF, for a service flow associated with the first QoS. Alternatively, the QoS configuration of the first QoS that is transmitted by the SMF to the AMF may be determined by the SMF based on a QoS parameter, transmitted by the PCF, for a service flow associated with the first QoS. In some embodiments, the QoS configuration of the first QoS may include a QoS parameter of a QoS flow associated with the first QoS. In other words, in some embodiments, the QoS parameter of the QoS flow associated with the first QoS may be determined based on a QoS parameter for a service flow associated with the first QoS. Alternatively, the candidate QoS configuration associated with the first QoS that is transmitted by the SMF to the AMF may be determined by the SMF based on a candidate QoS parameter, transmitted by the PCF, for a service flow associated with the first QoS, and the candidate QoS parameter for the service flow associated with the first QoS may be determined by the PCF based on a candidate QoS requirement, transmitted by the AF, associated with the first QoS. In some embodiments, the candidate QoS configuration associated with the first QoS may include a candidate QoS parameter for a service flow associated with the first QoS. In other words, in some embodiments, a candidate QoS parameter for a QoS flow associated with the first QoS may be determined based on a candidate QoS parameter for a service flow associated with the first QoS.

In some embodiments, the association identifier of the QoS configuration of the first QoS may be determined by the SMF based on the first information transmitted by the PCF, for example, determined based on association indication information for a service flow associated with the first QoS that is transmitted by the PCF. In some embodiments, the association identifier of the QoS configuration of the first QoS may be the same as association indication information for a service flow associated with the first QoS. In some embodiments, the association identifier of the QoS configuration of the first QoS may be different from association indication information for a service flow associated with the first QoS.

In some embodiments, the first information transmitted by the SMF to the AMF may be transmitted by using an N1N2 message.

In some embodiments, the first network element may be the AMF, and the second network element may be an access network device. In this case, the first information transmitted by the AMF to an access network device may include one or more of the following information: a QoS processing policy for a QoS flow associated with the first QoS; a QoS configuration of the first QoS; an association identifier of a QoS configuration of the first QoS; a candidate QoS parameter for a QoS flow associated with the first QoS; or an identifier of one or more access network devices associated with the first QoS.

In some embodiments, the first information transmitted by the AMF to the access network device (for example, a first access network device, a second access network device, or a third access network device mentioned below) may be determined by the AMF based on the first information transmitted by the SMF to the AMF.

In some embodiments, the first information transmitted by the AMF to the access network device may be the first information that is transmitted by the SMF to the AMF and is directly forwarded by the AMF. For example, the AMF may determine, based on the QoS processing policy for the QoS flow associated with the first QoS that is transmitted by the SMF, a QoS processing policy for a QoS flow associated with the first QoS that is to be transmitted (directly forwarded) to the access network device. Alternatively, the AMF may determine, based on the QoS configuration of the first QoS that is transmitted by the SMF, a QoS configuration of the first QoS that is to be transmitted to the access network device. Alternatively, the AMF may determine, based on the association identifier of the QoS configuration of the first QoS that is transmitted by the SMF, an association identifier of a QoS configuration of the first QoS that is to be transmitted to the access network device. Alternatively, the AMF may determine, based on the candidate QoS parameter for the QoS flow associated with the first QoS that is transmitted by the SMF, a candidate QoS parameter for a QoS flow associated with the first QoS that is to be transmitted to the access network device.

In some embodiments, the first information transmitted by the AMF to the access network device may be obtained through processing, by the AMF, the first information transmitted by the SMF to the AMF. For example, the identifier of one or more access network devices associated with the first QoS may be determined by the AMF based on an identifier of a group of nodes that is transmitted by the SMF and/or information of a QoS flow associated with the first QoS (for example, the QoS configuration of the first QoS, or the association identifier of the QoS configuration of the first QoS).

In some embodiments, the first information transmitted by the AMF to the access network device may be transmitted by using an N2 session message.

In some embodiments, all nodes in a group of nodes may be within coverage of a same access network device. In this case, the AMF may transmit, to the access network device, a parameter related to the first QoS (for example, the QoS processing policy for the QoS flow associated with the first QoS, the QoS configuration of the first QoS, the association identifier of the QoS configuration of the first QoS, or the candidate QoS parameter for the QoS flow associated with the first QoS) that is received from the SMF.

In some embodiments, all nodes in a group of nodes may be within coverage of different access network devices. In this case, in addition to a parameter related to the first QoS that is received from the SMF, the AMF transmits an identifier of one or more access network devices associated with the first QoS to each of the access network device, so that each of the access network devices may communicate with each other to jointly ensure the first QoS.

It should be noted that, when the second network element is an access network device, the access network device may be any access network device of one or more access network devices associated with the first QoS. The following description is provided using an example in which the second network element is a first access network device.

In some embodiments, the first access network device may determine, based on the association identifier of the QoS configuration of the first QoS, one or more QoS flows (group QoS flows) that are required to be managed, and performs resource allocation on the one or more QoS flows based on a QoS parameter (group QoS parameter) of a QoS flow associated with the first QoS and a QoS processing policy (group QoS processing policy) for a QoS flow associated with the first QoS, to ensure a QoS requirement of the entire group. Federated learning is used as an example. In this case, when first receiving a data packet corresponding to a local training result that is transmitted by a terminal device, the first access network device may allocate fewer communication resources to the terminal device, and allocate more communication resources to other slower terminal devices, to implement flexible allocation of resources between terminal devices while ensuring that the group QoS remains unchanged.

In some embodiments, if the first access network device receives a separate candidate QoS parameter (a candidate QoS parameter on a QoS flow granularity basis) for each node in a group of nodes, the first access network device may select a candidate QoS parameter with a lower transmission rate for a terminal device that the result is first received from, and may select a candidate QoS parameter with a higher transmission rate for a slower terminal device.

In some embodiments, if the first access network device receives a candidate QoS parameter (a group-based candidate QoS parameter) associated with the first QoS, in a case in which the first access network device cannot ensure a QoS requirement of the entire group, the first access network device may select the candidate QoS parameter associated with the first QoS, for example, to reduce a transmission rate of the entire group.

In some embodiments, if the first access network device cannot meet a QoS requirement of the first QoS, or selects a group-based candidate QoS parameter, the first access network device may transmit first indication information to a network (for example, a core network), where the first indication information may be used to indicate that the QoS requirement of the first QoS cannot be met.

In some embodiments, the first indication information transmitted by the first access network device to a network may carry a candidate QoS parameter associated with the first QoS (that is, a group-based candidate QoS parameter selected by the first access network device), which is selected by the first access network device.

In some embodiments, after receiving the first indication information, the network may transmit the first indication information to the AF, so that the AF makes a next decision based on the first indication information, for example, may select to stop the group service, or may select to reduce a QoS requirement of the group service, or the like.

In some embodiments, the first network element may be an access network device (for example, the first access network device), and the second network element may be a terminal device (for example, a terminal device in the first group of terminal devices, or a node of nodes associated with the group service). In this case, the first information may include resource allocation information corresponding to the first QoS, and the resource allocation information may be used to indicate a resource allocated by the access network device for the terminal device based on the first QoS.

In some embodiments, the first information transmitted by the access network device to the terminal device may be determined by the access network device based on the first information transmitted by the AMF to the access network device. For example, the access network device may determine, based on one or more of the QoS processing policy for the QoS flow associated with the first QoS, the QoS configuration of the first QoS, the association identifier of the QoS configuration of the first QoS, the candidate QoS parameter for the QoS flow associated with the first QoS, or the identifier of one or more access network devices associated with the first QoS, which are transmitted by the AMF, the resource allocation information corresponding to the first QoS. For example, the access network device may update or adjust, based on one or more of the foregoing information, the resource allocation information corresponding to the first QoS.

In some embodiments, if the access network device (for example, the first access network device) is unable to meet a QoS requirement of the first QoS, the resource allocation information corresponding to the first QoS may be determined by the access network device based on a candidate QoS parameter associated with the first QoS.

As described above, in some embodiments, all nodes in a group of nodes may be within coverage of different access network devices. In this case, the different access network devices are required to communicate with each other to jointly ensure the first QoS. The following describes, using an example in which different access network devices include a second access network device and a third access network device, a process of interaction between different access network devices to jointly ensure the first QoS.

In general, the second access network device and the third access network device may allocate communication resources based on a QoS parameter of the first QoS (that is, a group-based QoS parameter), and perform synchronization between the second access network device and the third access network device via an interface between access networks (for example, an Xn interface), ensuring that total resources allocated for all QoS flows involved in the group service do not exceed a requirement of group-based QoS corresponding to the group service.

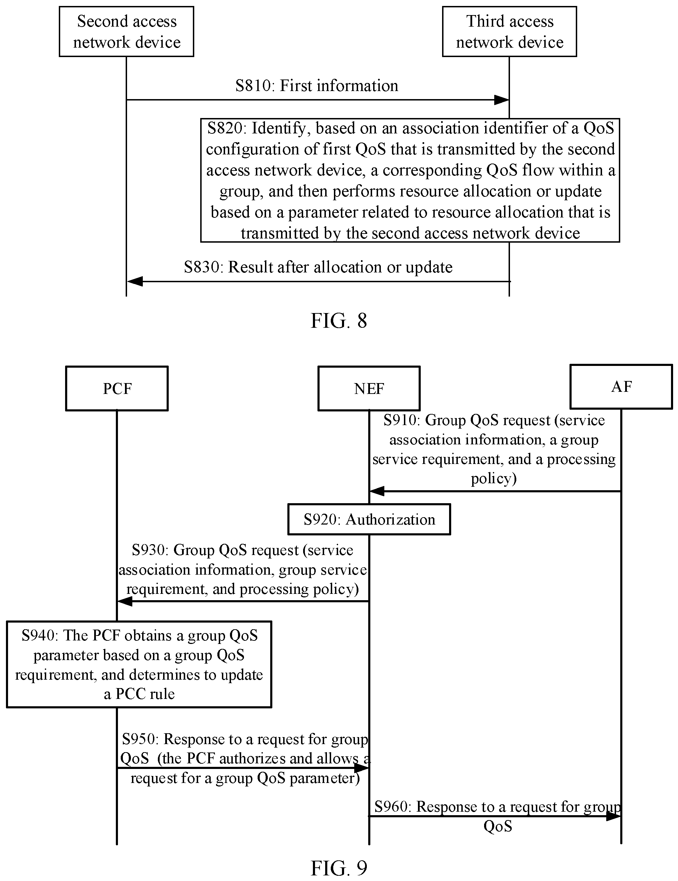

FIG. 8 is a schematic flowchart of a wireless communication method according to still another embodiment of this application. The method shown in FIG. 8 is described from a perspective of interaction between the second access network device and the third access network device. The method shown in FIG. 8 may include step S810 to step S830. The following describes these steps.

In step S810, the second access network device transmits first information to the third access network device.

In some embodiments, the second access network device may transmit the first information to the third access network device when allocating or updating communication resources for a QoS flow corresponding to a terminal device that the second access network device serves.

In some embodiments, the first information transmitted by the second access network device to the third access network device may include one or more of the following information: information about a resource allocated by the second access network device for a QoS flow associated with the first QoS; information about a QoS requirement of a QoS flow associated with the first QoS that has been met by the second access network device; a candidate QoS parameter used by the second access network device for a QoS flow associated with the first QoS; or an association identifier of a QoS configuration of the first QoS.

In some embodiments, the first information transmitted by the second access network device to the third access network device may be determined by the second access network device based on the first information transmitted by the AMF to the second access network device. For example, the second access network device determines, based on an identifier, transmitted by the AMF, of one or more access network devices associated with the first QoS, which access network devices (e.g., the third access network device) the second access network device is required to interact with to jointly ensure the first QoS. Alternatively, the second access network device determines, based on the QoS configuration of the first QoS that is transmitted by the AMF, which resources is to be allocated by the second access network device for a QoS flow associated with the first QoS, and shares, with the third access network device, information about the resource allocated for the QoS flow associated with the first QoS, and so on.

In step S820, the third access network device identifies, based on the association identifier of the QoS configuration of the first QoS that is transmitted by the second access network device, a corresponding QoS flow within the group, and then performs resource allocation or update for a QoS flow of the third access network device based on a parameter related to resource allocation that is transmitted by the second access network device.

In some embodiments, the parameter related to resource allocation that is transmitted by the second access network device may include part or all of information in the first information mentioned in step S810, for example, may include the information about the resource allocated by the second access network device for the QoS flow associated with the first QoS, the information about the QoS requirement, that has been met by the second access network device, of the QoS flow associated with the first QoS, the candidate QoS parameter used by the second access network device for the QoS flow associated with the first QoS, and the like.

In step S830, the third access network device transmits the result of the resource allocation or update to the second access network device.

In some embodiments, the result transmitted by the third access network device to the second access network device may include one or more of the following information: information about a resource allocated by the third access network device for a QoS flow associated with the first QoS; information about a QoS requirement of a QoS flow associated with the first QoS that has been met by the third access network device; a candidate QoS parameter used by the third access network device for a QoS flow associated with the first QoS; or an association identifier of a QoS configuration of the first QoS;

In some embodiments, the third access network device may identify a QoS flow, within the group, corresponding to the first QoS and/or perform resource allocation or update for the QoS flow, within the group, corresponding to the first QoS based on the first information transmitted by the AMF to the third access network device and/or the first information transmitted by the second access network device to the third access network device. For example, how to allocate or update resources for the QoS flow associated with the first QoS may be determined based on the QoS configuration of the first QoS that is transmitted by the AMF and the information, transmitted by the second access network device, about the resource allocated by the second access network device for the QoS flow associated with the first QoS.

In some embodiments, step S810 to step S830 may occur between the second access network device and the third access network device for a plurality of times.

It should be noted that embodiments of this application are described using interaction between two access network devices as an example, but the solution may be extended to interaction among more than two access network devices. The more than two access network devices may exchange a parameter related to the resource allocated for the first QoS, to jointly ensure the first QoS.

Through interaction among a plurality of access network devices, flexible resource scheduling between the access network devices may be achieved without triggering a session modification procedure or notifying the core network each time new resource allocation is performed.

In some embodiments, when a QoS requirement of the entire group is unable to be met through resource allocation among a plurality of access network devices (for example, the second access network device and the third access network device), or when a group-based candidate QoS requirement is selected through negotiation among a plurality of access network devices, any access network device may transmit first indication information to the network to indicate that the QoS requirement of the first QoS cannot be met. In this way, the access network device notifies the core network only when the access network device cannot meet the overall QoS requirement, which may reduce unnecessary signalling overheads.

It should be noted that the first access network device described above may be the second access network device herein, or the third access network device, which is not limited in this application.

It should be noted that the interactions between the network elements mentioned in embodiments of this application may be combined in any way and is not limited in embodiments of this application, as long as the combination can be implemented. For example, the embodiment where the AF transmits the first information to the PCF and the embodiment where the PCF transmits the first information to the SMF may be combined. Alternatively, the embodiment where the PCF transmits the first information to the SMF and the embodiment where the SMF transmits the first information to the AMF may be combined. Alternatively, the embodiment where the AF transmits the first information to the PCF, the embodiment where the PCF transmits the first information to the SMF, and the embodiment where the SMF transmits the first information to the AMF may be combined, and so on. Interactions between other network elements may also be combined similarly.

For ease of understanding, the following provides several specific embodiments by using federated learning as an example. It should be noted that the embodiments below are merely examples, and are not intended to limit this application. It should be also noted that the embodiments below may be partially or completely combined with each other, which is not limited in this application. For example, Embodiment 1 and Embodiment 2 may be combined, or Embodiment 1 and Embodiment 3 may be combined, and so on.

Embodiment 1: the AF transmits a QoS requirement of the first QoS to the PCF.

FIG. 9 is a schematic flowchart of a wireless communication method according to still another embodiment of this application. The method shown in FIG. 9 may include step S910 to step S960.

In step S910, the AF transmits a request for group QoS to the NEF. The request may include an ID of each of terminal devices in the first group of terminal devices that is required to perform federated learning, association indication information for a service flow associated with the first QoS (that is, association information for a plurality of service flows), and a QoS requirement of the first QoS (for example, a guaranteed bit rate, a maximum bit rate, a transmission delay, and a priority required for the service).

In some embodiments, the AF may transmit a QoS processing policy for the first QoS to the NEF (a processing policy at a group level). For example, resources for other terminal devices in the group for this service may be scheduled, so as to implement flexible resource allocation and ensure that local training results of all terminal devices in the group can reach the FL server almost simultaneously.

In some embodiments, the AF may further provide, for each group node, a separate service requirement candidate parameter set and/or the AF may provide a candidate QoS requirement set associated with the first QoS (a group-based candidate requirement set).

In step S920, the NEF authorizes the request from the AF.

In step S930, the NEF forwards the request to the PCF, where the message includes the parameters in step S910.

In step S940, the PCF generates, based on the group QoS requirement, a QoS parameter based on a group service, that is, one or more of the foregoing group-GBR/MRB, group-PDB, or group-ARP.

In some embodiments, the PCF may determine, based on a received group processing policy, to update a policy for the SMF. Therefore, an SMF policy update procedure is initiated, and a specific procedure is described in Embodiment 2 and/or Embodiment 3 below.

In some embodiments, if a separate service requirement candidate parameter set and/or a group-based candidate requirement set for each group node is/are carried in the request from the AF, the PCF may generate a candidate QoS parameter set and/or a group-based candidate requirement set at a service flow level for each node.

In step S950, the PCF authorizes and allows the request for group QoS, and transmits a response to the NEF, to indicate that the requested group-level QoS requirement can be ensured.

In step S960, the NEF transmits, to the AF, a result indicating that the group QoS can be ensured.

It should be understood that Embodiment 1 may serve as precursor steps to Embodiment 2 and/or Embodiment 3 described later. In other words, through Embodiment 1, the AF may transmit a request for group QoS to the PCF, and the PCF generates a group QoS parameter, and establishes a policy and updates the policy for the SMF.

Embodiment 2: a group of nodes is within coverage of a same access network device, and the network performs a procedure for a group QoS parameter.

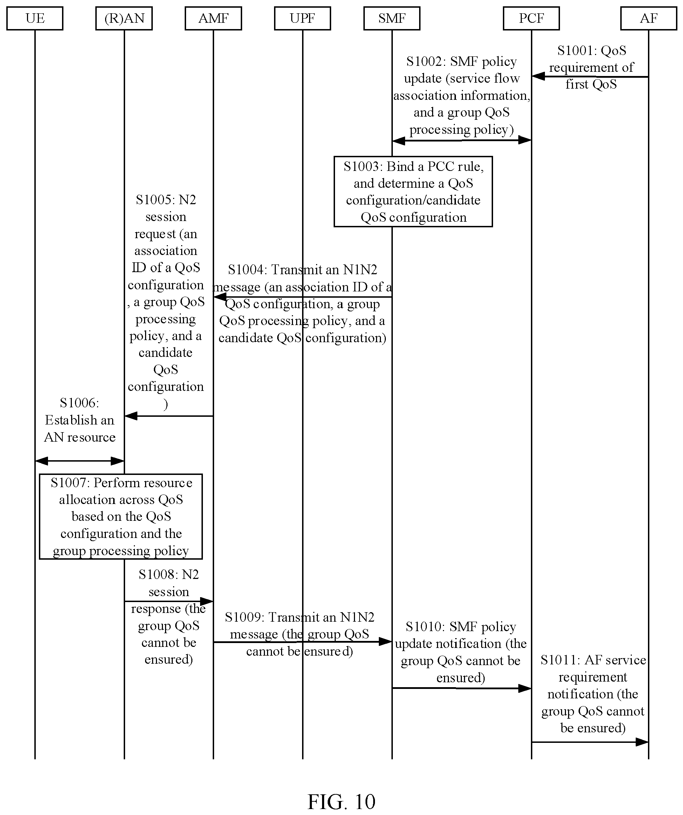

FIG. 10 is a schematic flowchart of a wireless communication method according to still another embodiment of this application. The method shown in FIG. 10 may include step S1001 to step S1011.

In step S1001, the AF transmits a QoS requirement of the first QoS to the PCF.

For details of step S1001, reference may be made to the description of Embodiment 1.

In step S1002, the PCF provides, for the SMF, association indication information for a service flow associated with the first QoS, to indicate that service flows of the plurality of terminal devices for the federated learning form a group. In step S1002, the PCF may further provide a group QoS parameter and a group QoS processing policy for the SMF. These two parameters may either be included in a PCC rule or transmitted as separate parameters to the SMF.

In step S1003, the SMF binds the PCC rule based on the information provided by the PCF.

In an implementation, for each terminal device, the SMF may bind the PCC rule corresponding to this federated learning service to a specific QoS flow, while this QoS flow is not bound to another service. Therefore, each QoS flow does not have a QoS parameter at a QoS flow level, but only a group QoS parameter corresponding to the group of QoS flows.

In some embodiments, the SMF may further determine a group-based QoS configuration. The group-based QoS configuration includes a group-based QoS parameter. Each QoS configuration may be associated with a QoS flow ID (e.g., QFI) within the group and transmitted to the RAN.

In some embodiments, the SMF may further determine an association ID of the QoS configuration of the first QoS, which is used by the access network device to identify a group of QoS flows and perform group-based resource allocation.

In some embodiments, the SMF may further determine a candidate QoS configuration. The candidate QoS configuration may be either a group-level configuration or a separate QoS flow-level configuration.

In step S1004, the SMF transmits the association ID of the QoS configuration of the first QoS, the group QoS processing policy, and the candidate QoS configuration to the AMF.

In some embodiments, the SMF may transmit the foregoing information to the AMF by using an N1N2 message.

In step S1005, the AMF transmits the information obtained in step S1004 to the access network device.

In some embodiments, the AMF may transmit the foregoing information to the access network device by using an N2 session request message.

In step S1006, a connection on the access network side is established between the access network device and a plurality of terminal devices.

In step S1007, the access network device determines, based on the association ID of the QoS configuration of the first QoS, a group QoS flow to be managed, and performs resource allocation for the group QoS flow based on the group QoS parameter and group QoS processing policy in the QoS configuration, to ensure a QoS requirement of the entire group.

In an implementation, when first receiving a data packet corresponding to a local training result that is transmitted by a certain terminal device, the access network device may allocate fewer communication resources to that terminal device, and allocate more communication resources to other slower terminal device, so as to ensure that flexible allocation of resources among UEs is achieved while maintaining the group QoS unchanged.

In some embodiments, if the access network device receives a candidate QoS parameter set on a QoS flow granularity basis, the access network device may select a candidate QoS parameter with a lower transmission rate for a terminal device that the result is first received from, and may select a candidate QoS parameter set with a higher transmission rate for a slower terminal device.

In some embodiments, if the access network device receives a group-based candidate QoS parameter, and the access network device cannot guarantee the QoS requirement of the entire group, the access network device may select the group-based candidate QoS parameter, for example, reduction of a transmission rate of the entire group.

In step S1008, if the access network device cannot meet the overall QoS requirement, or if the access network device selects the group-based candidate QoS parameter, the access network device transmits a response to the AMF indicating that the overall QoS requirement cannot be met.

In some embodiments, the response message transmitted by the access network device to the AMF may carry the group-based candidate QoS parameter selected by the access network device.

In some embodiments, the response message transmitted by the access network device to the AMF is an N2 session response message.

In step S1009, the AMF transmits a response to the SMF indicating that the overall QoS requirement cannot be met.

In some embodiments, the response message transmitted by the AMF to the SMF may carry the group-based candidate QoS parameter selected by the access network device.

In some embodiments, the response message transmitted by the AMF to the SMF is an N1N2 message.

In step S1010, the SMF transmits an SMF policy update notification to the PCF to indicate that the overall QoS requirement cannot be met.

In some embodiments, the message transmitted by the SMF to the PCF carries the group-based candidate QoS parameter selected by the access network device.

In step S1011, the PCF notifies the AF that the overall QoS requirement cannot be met.

In some embodiments, the message transmitted by the PCF to the AF may carry the group-based candidate QoS parameter selected by the access network device.

In some embodiments, after receiving the information, the AF may select to stop the federated learning, or reduce a QoS requirement of the federated learning.

Embodiment 3: a group of nodes is within coverage of different access network devices, and the network performs a procedure for a group QoS parameter.

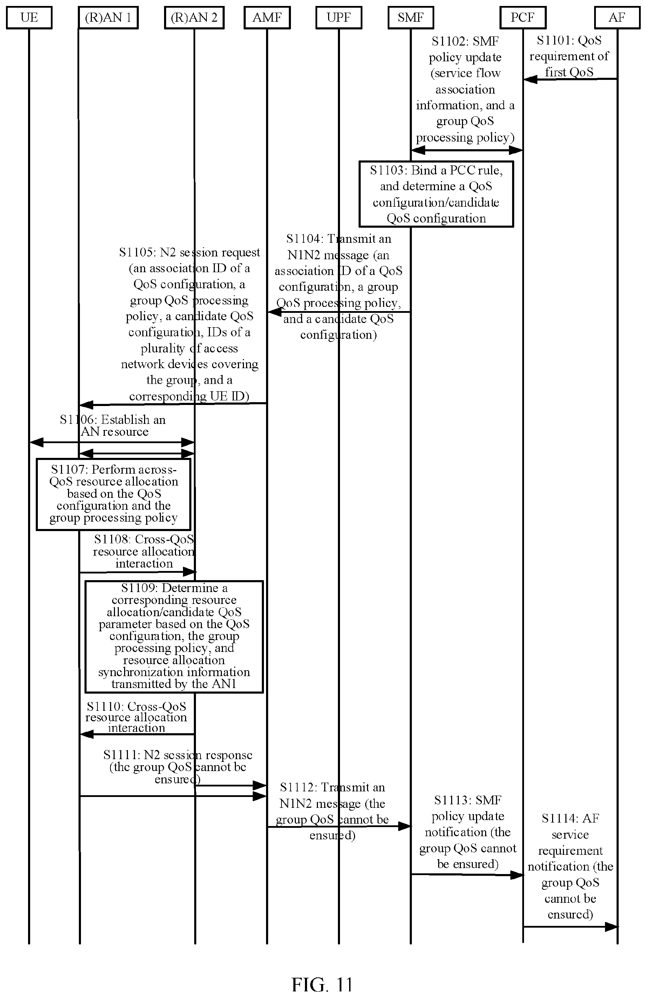

FIG. 11 is a schematic flowchart of a wireless communication method according to still another embodiment of this application. The method shown in FIG. 11 may include step S1101 to step S1114.

For details of S1101 to step S1104, reference may be made to step S1001 to step S1004 in Embodiment 2. Details are not described herein again.

In step S1105, since the group of terminal devices is not within coverage of a single access network device, when the AMF receives a group-based related parameter, the AMF is required to select, based on IDs of terminal devices within the group, access network devices that serves the UEs, and the AMF then transmits the IDs of the access network devices serving the group of terminal devices, along with other parameters, to a plurality of access network devices.

In step S1106, a connection on the access network side is established between each access network device and the terminal device.

In step S1107, all access network devices allocate communication resources based on the group QoS parameter, and perform synchronization between the access network devices via an Xn interface between the access network devices, ensuring that total resources allocated for all involved QoS flows do not exceed the requirement of the group QoS.

In step S1108, taking an access network device 1 (e.g., the second access network device mentioned above) an example, when the access network device 1 allocates or updates communication resources for a QoS flow corresponding to a terminal device that the access network device 1 serves, the access network device 1 transmits, to an access network device 2 (e.g., the third access network device mentioned above) via the Xn interface, the allocated communication resources, a QoS requirement corresponding to a single QoS flow that has been met or a candidate QoS parameter used by the QoS flow, and an association ID of a QoS configuration of the first QoS.

In step S1109, the access network device 2 identifies, based on the association ID of the QoS configuration of the first QoS, a corresponding QoS flow within the group, and then performs resource allocation or update for a QoS flow of the access network device 2 based on a parameter related to resource allocation that is transmitted by the access network device 1.

In step S1110, the access network device 2 transmits a result of the resource allocation or update to the access network device 1, where the message may include the resource allocated by the access network device 2, the candidate QoS parameter used by the QoS flow of the access network device 2, and the association ID of the QoS configuration of the first QoS, and the message is transmitted to the access network device 1 via the Xn interface.

Step S1107 to step S1110 may occur between access network devices for a plurality of times. In this manner, flexible resource scheduling between the access network devices may be achieved without triggering a session modification procedure or notifying the core network each time new resource allocation is performed.

In step S1111, when the access network devices cannot meet the QoS requirement of the entire group through resource allocation, or when the access network devices select a candidate group-based QoS requirement through negotiation, any access network device may transmit this indication to the core network. Specifically, for the step of transmitting the indication, reference may be made to step S1008 in Embodiment 2.

In step S1112 to step S1114, a core network network element transmits the indication information in step S1111 to the AF, so that the AF makes a next decision. Specifically, for the step of transmitting the indication information in step S1111 to the AF by the core network network element, reference may be made to step S1009 to step S1011 in Embodiment 2.

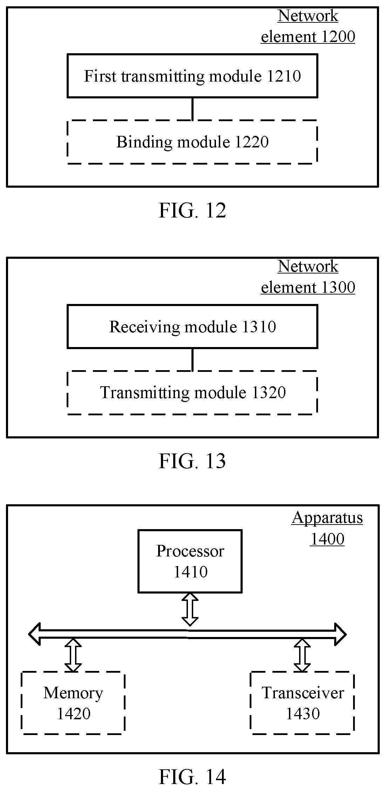

The method embodiments of this application are described above in detail with reference to FIG. 1 to FIG. 11. Apparatus embodiments of the application are described below in detail with reference to FIG. 12 to FIG. 14. It should be understood that the descriptions of the method embodiments correspond to descriptions of the apparatus embodiments, and therefore, for parts that are not described in detail, reference may be made to the foregoing method embodiments.

FIG. 12 is a schematic structural diagram of a network element according to an embodiment of this application. The network element 1200 shown in FIG. 12 may be any first network element described above. The network element 1200 shown in FIG. 12 may include a first transmitting module 1210.

The first transmitting module 1210 may be configured to transmit first information to a second network element, where the first information is associated with first quality of service QoS, and the first QoS corresponds to a first group of terminal devices.

Optionally, the first information is used to indicate one or more of the following: information for requesting the first QoS; a QoS parameter of the first QoS; QoS configuration information for the first QoS; processing policy information for the first QoS; resource allocation information corresponding to the first QoS; or information about candidate QoS associated with the first QoS.

Optionally, the first information includes one or more of the following: a QoS requirement of the first QoS; association indication information for a service flow associated with the first QoS; a QoS parameter of the first QoS; a QoS configuration of the first QoS; an association identifier of a QoS configuration of the first QoS; or a QoS processing policy for the first QoS; a policy charging control PCC rule corresponding to the first QoS; resource allocation information corresponding to the first QoS; a candidate QoS requirement associated with the first QoS; a candidate QoS parameter associated with the first QoS; or a candidate QoS configuration associated with the first QoS.

Optionally, the first information includes the QoS parameter of the first QoS, and the QoS parameter of the first QoS is used to indicate one or more of the following information: transmission rate information corresponding to the first QoS; delay information corresponding to the first QoS; priority information corresponding to the first QoS; or resource preemption information corresponding to the first QoS.

Optionally, the QoS parameter of the first QoS includes one or more of the following parameters: a group transmission rate for indicating a transmission rate of the first QoS; a group maximum transmission rate for indicating a maximum transmission rate that a network allows for the first QoS; a group packet delay budget for indicating a delay budget corresponding to the first QoS; or a group allocation and retention priority for indicating an allocation and retention priority corresponding to the first QoS.

Optionally, the first network element is an application function AF network element, the second network element is a policy control function PCF network element, and the first information includes one or more of the following information: a QoS requirement of the first QoS; association indication information for a service flow associated with the first QoS; a QoS processing policy for a service flow associated with the first QoS; or a candidate QoS requirement associated with the first QoS.

Optionally, the first network element is a PCF network element, the second network element is a session management function SMF network element, and the first information includes one or more of the following information: association indication information for a service flow associated with the first QoS; a QoS parameter for a service flow associated with the first QoS; a QoS processing policy for a service flow associated with the first QoS; a candidate QoS parameter for a service flow associated with the first QoS; or a PCC rule corresponding to the first QoS.

Optionally, the first network element may further include one or more of the following: a first generation module, configured to generate, based on a QoS requirement of the first QoS, a QoS parameter for a service flow associated with the first QoS; a determining module, configured to determine, based on the QoS processing policy for the service flow associated with the first QoS, a policy for updating the second network element; or a second generation module, configured to generate, based on a candidate QoS requirement associated with the first QoS, a candidate QoS parameter for a service flow associated with the first QoS.

Optionally, at least one of the QoS parameter for the service flow associated with the first QoS or the QoS processing policy for the service flow associated with the first QoS is included in a PCC rule corresponding to the first QoS.

Optionally, the first network element is an SMF network element, the second network element is an access and mobility management function AMF network element, and the first information includes one or more of the following information: a QoS processing policy for a QoS flow associated with the first QoS; a QoS configuration of the first QoS; an association identifier of a QoS configuration of the first QoS; or a candidate QoS configuration associated with the first QoS.

Optionally, the first network element further includes: a binding module 1220, configured to bind a PCC rule corresponding to the first QoS to one or more QoS flows, where the one or more QoS flows include a QoS parameter of a QoS flow associated with the first QoS.

Optionally, the first network element is an AMF network element, the second network element is a first access network device, and the first information includes one or more of the following information: a QoS processing policy for a QoS flow associated with the first QoS; a QoS configuration of the first QoS; an association identifier of a QoS configuration of the first QoS; or a candidate QoS parameter for a QoS flow associated with the first QoS; or an identifier of one or more access network devices associated with the first QoS.

Optionally, the first network element is a first access network device, the second network element is a terminal device in the first group of terminal devices, and the first information includes resource allocation information corresponding to the first QoS.

Optionally, in a case that the first network element is unable to meet a QoS requirement of the first QoS, the resource allocation information corresponding to the first QoS is determined by the first network element based on a candidate QoS parameter associated with the first QoS.

Optionally, the first network element further includes: a second transmitting module, configured to: in a case that the first network element is unable to meet a QoS requirement of the first QoS, transmit first indication information to a network, where the first indication information is used to indicate that the QoS requirement of the first QoS fails to be met.

Optionally, the first indication information includes a candidate QoS parameter associated with the first QoS, which is selected by the first network element.

Optionally, the first network element is a second access network device, the second network element is a third access network device, and the first information includes one or more of the following information: information about a resource allocated by the second access network device for a QoS flow associated with the first QoS; information about a QoS requirement, that has been met by the second access network device, of a QoS flow associated with the first QoS; a candidate QoS parameter used by the second access network device for a QoS flow associated with the first QoS; or an association identifier of a QoS configuration of the first QoS.

Optionally, the first group of terminal devices includes a plurality of terminal devices for a same task.

Optionally, the first transmitting module 1210 may be a transceiver 1430. The network element 1200 may further include a processor 1410 and a memory 1420, as shown in FIG. 14.

FIG. 13 is a schematic structural diagram of a network element according to another embodiment of this application. The network element 1300 shown in FIG. 13 may be any second network element described above. The network element 1300 shown in FIG. 13 may include a receiving module 1310.

The receiving module 1310 may be configured to receive first information transmitted by a first network element, where the first information is associated with first quality of service QoS, and the first QoS corresponds to a first group of terminal devices.

Optionally, the first information is used to indicate one or more of the following: information for requesting the first QoS; a QoS parameter of the first QoS; QoS configuration information for the first QoS; processing policy information for the first QoS; resource allocation information corresponding to the first QoS; or information about candidate QoS associated with the first QoS.

Optionally, the first information includes one or more of the following: a QoS requirement of the first QoS; association indication information for a service flow associated with the first QoS; a QoS parameter of the first QoS; a QoS configuration of the first QoS; an association identifier of a QoS configuration of the first QoS; or a QoS processing policy for the first QoS; a policy charging control PCC rule corresponding to the first QoS; resource allocation information corresponding to the first QoS; a candidate QoS requirement associated with the first QoS; a candidate QoS parameter associated with the first QoS; or a candidate QoS configuration associated with the first QoS.

Optionally, the first information includes the QoS parameter of the first QoS, and the QoS parameter of the first QoS is used to indicate one or more of the following information: transmission rate information corresponding to the first QoS; delay information corresponding to the first QoS; priority information corresponding to the first QoS; or resource preemption information corresponding to the first QoS.

Optionally, the QoS parameter of the first QoS includes one or more of the following parameters: a group transmission rate for indicating a transmission rate of the first QoS; a group maximum transmission rate for indicating a maximum transmission rate that a network allows for the first QoS; a group packet delay budget for indicating a delay budget corresponding to the first QoS; or a group allocation and retention priority for indicating an allocation and retention priority corresponding to the first QoS.

Optionally, the first network element is an application function AF network element, the second network element is a policy control function PCF network element, and the first information includes one or more of the following information: a QoS requirement of the first QoS; association indication information for a service flow associated with the first QoS; a QoS processing policy for a service flow associated with the first QoS; or a candidate QoS requirement associated with the first QoS.

Optionally, the second network element further includes one or more of the following: a first generation module, configured to generate, based on a QoS requirement of the first QoS, a QoS parameter for a service flow associated with the first QoS; a determining module, configured to determine, based on the QoS processing policy for the first QoS, a policy for updating the second network element; or a second generation module, configured to generate, based on a candidate QoS requirement of the first QoS, a candidate QoS parameter for a service flow associated with the first QoS.

Optionally, the first network element is a PCF network element, the second network element is a session management function SMF network element, and the first information includes one or more of the following information: association indication information for a service flow associated with the first QoS; a QoS parameter for a service flow associated with the first QoS; a QoS processing policy for a service flow associated with the first QoS; a candidate QoS parameter for a service flow associated with the first QoS; or a PCC rule corresponding to the first QoS.

Optionally, at least one of the QoS parameter for the service flow associated with the first QoS or the QoS processing policy for the service flow associated with the first QoS is included in a PCC rule corresponding to the first QoS.

Optionally, the second network element further includes: a binding module, configured to bind a PCC rule corresponding to the first QoS to one or more QoS flows, where the one or more QoS flows include a QoS parameter of a QoS flow associated with the first QoS.

Optionally, the first network element is an SMF network element, the second network element is an access and mobility management function AMF network element, and the first information includes one or more of the following information: a QoS processing policy for a QoS flow associated with the first QoS; a QoS configuration of the first QoS; an association identifier of a QoS configuration of the first QoS; or a candidate QoS configuration associated with the first QoS.

Optionally, the first network element is an AMF network element, the second network element is a first access network device, and the first information includes one or more of the following information: a QoS processing policy for a QoS flow associated with the first QoS; a QoS configuration of the first QoS; an association identifier of a QoS configuration of the first QoS; a candidate QoS parameter for a QoS flow associated with the first QoS; or an identifier of one or more access network devices associated with the first QoS.

Optionally, in a case that the second network element is unable to meet a QoS requirement of the first QoS, the resource allocation information corresponding to the first QoS is determined by the second network element based on a candidate QoS parameter associated with the first QoS.

Optionally, the second network element further includes: a transmitting module 1320, configured to: in a case that the second network element is unable to meet a QoS requirement of the first QoS, transmit first indication information to a network, where the first indication information is used to indicate that the QoS requirement of the first QoS fails to be met.

Optionally, the first indication information includes a candidate QoS parameter for the first QoS, which is selected by the first network element.

Optionally, the first network element is a first access network device, the second network element is a terminal device in the first group of terminal devices, and the first information includes resource allocation information corresponding to the first QoS.

Optionally, the first network element is a second access network device, the second network element is a third access network device, and the first information includes one or more of the following information: information about a resource allocated by the second access network device for a QoS flow associated with the first QoS; information about a QoS requirement, that has been met by the second access network device, of a QoS flow associated with the first QoS; a candidate QoS parameter used by the second access network device for a QoS flow associated with the first QoS; or an association identifier of a QoS configuration of the first QoS.

Optionally, the first group of terminal devices includes a plurality of terminal devices for a same task.

Optionally, the receiving module 1310 may be a transceiver 1430. The network element 1300 may further include a processor 1410 and a memory 1420, as shown in FIG. 14.

FIG. 14 is a schematic structural diagram of a communications apparatus according to an embodiment of this application. Dashed lines in FIG. 14 indicate that a unit or module is optional. The apparatus 1400 may be configured to implement the methods described in the foregoing method embodiments. The apparatus 1400 may be a chip, a terminal device, or a network device.

The apparatus 1400 may include one or more processors 1410. The processor 1410 may support the apparatus 1400 in implementing the methods described in the foregoing method embodiments. The processor 1410 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1400 may further include one or more memories 1420. The memory 1420 stores a program that may be executed by the processor 1410 to cause the processor 1410 to perform the methods described in the foregoing method embodiments. The memory 1420 may be separate from the processor 1410 or may be integrated into the processor 1410.

The apparatus 1400 may further include a transceiver 1430. The processor 1410 may communicate with another device or chip through the transceiver 1430. For example, the processor 1410 may transmit data to and receive data from another device or chip through the transceiver 1430.

An embodiment of this application further provides a computer-readable storage medium for storing a program. The computer-readable storage medium may be applied to the first network element or the second network element provided in embodiments of this application, and the program causes a computer to perform the method executed by the first network element or the second network element in various embodiments of this application.

An embodiment of this application further provides a computer program product. The computer program product includes a program. The computer program product may be applied to the first network element or the second network element provided in embodiments of this application, and the program causes a computer to perform the method executed by the first network element or the second network element in various embodiments of this application.

An embodiment of this application further provides a computer program. The computer program may be applied to the first network element or the second network element provided in embodiments of this application, and the computer program causes a computer to perform the method executed by the first network element or the second network element in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being pre-defined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in the specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

The foregoing descriptions are merely specific implementations of the application, but the protection scope of the application is not limited thereto. Any variation or replacement readily figured out by a person skilled in the art within the technical scope disclosed in the application shall fall within the protection scope of the application. Therefore, the protection scope of the application shall be subject to the protection scope of the claims.

## Claims

1. A wireless communication method, comprising:
transmitting, by a first network element, first information to a second network element, wherein the first information is associated with first quality of service QoS, and the first QoS corresponds to a first group of terminal devices.

2. The method according to claim 1, wherein the first information is used to indicate one or more of following:
information for requesting the first QoS;
a QoS parameter of the first QoS;
QoS configuration information for the first QoS;
processing policy information for the first QoS;
resource allocation information corresponding to the first QoS; or
information about candidate QoS associated with the first QoS.

3. The method according to claim 1 or 2, wherein the first information comprises one or more of following:
a QoS requirement of the first QoS;
association indication information for a service flow associated with the first QoS;
a QoS parameter of the first QoS;
a QoS configuration of the first QoS;
an association identifier of a QoS configuration of the first QoS;
a QoS processing policy for the first QoS;
a policy charging control PCC rule corresponding to the first QoS;
resource allocation information corresponding to the first QoS;
a candidate QoS requirement associated with the first QoS;
a candidate QoS parameter associated with the first QoS; or
a candidate QoS configuration associated with the first QoS.

4. The method according to any one of claims 1 to 3, wherein the first information comprises a QoS parameter of the first QoS, and the QoS parameter of the first QoS is used to indicate one or more of following information:
transmission rate information corresponding to the first QoS;
delay information corresponding to the first QoS;
priority information corresponding to the first QoS; or
resource preemption information corresponding to the first QoS.

5. The method according to any one of claims 1 to 4, wherein a QoS parameter of the first QoS comprises one or more of following parameters:
a group transmission rate for indicating a transmission rate of the first QoS;
a group maximum transmission rate for indicating a maximum transmission rate that a network allows for the first QoS;
a group packet delay budget for indicating a delay budget corresponding to the first QoS; or
a group allocation and retention priority for indicating an allocation and retention priority corresponding to the first QoS.

6. The method according to any one of claims 1 to 5, wherein the first network element is an application function AF network element, the second network element is a policy control function PCF network element, and the first information comprises one or more of following information:
a QoS requirement of the first QoS;
association indication information for a service flow associated with the first QoS;
a QoS processing policy for a service flow associated with the first QoS; or
a candidate QoS requirement associated with the first QoS.

7. The method according to any one of claims 1 to 5, wherein the first network element is a PCF network element, the second network element is a session management function SMF network element, and the first information comprises one or more of following information:
association indication information for a service flow associated with the first QoS;
a QoS parameter for a service flow associated with the first QoS;
a QoS processing policy for a service flow associated with the first QoS;
a candidate QoS parameter for a service flow associated with the first QoS; or
a PCC rule corresponding to the first QoS.

8. The method according to claim 7, further comprising one or more of following:
generating, by the first network element based on a QoS requirement of the first QoS, a QoS parameter for a service flow associated with the first QoS;
determining, by the first network element based on the QoS processing policy for the service flow associated with the first QoS, a policy for updating the second network element; or
generating, by the first network element based on a candidate QoS requirement associated with the first QoS, a candidate QoS parameter for a service flow associated with the first QoS.

9. The method according to claim 7 or 8, wherein at least one of the QoS parameter for the service flow associated with the first QoS or the QoS processing policy for the service flow associated with the first QoS is comprised in a PCC rule corresponding to the first QoS.

10. The method according to any one of claims 1 to 5, wherein the first network element is an SMF network element, the second network element is an access and mobility management function AMF network element, and the first information comprises one or more of following information:
a QoS processing policy for a QoS flow associated with the first QoS;
a QoS configuration of the first QoS;
an association identifier of a QoS configuration of the first QoS; or
a candidate QoS configuration associated with the first QoS.

11. The method according to claim 10, further comprising:
binding, by the first network element, a PCC rule corresponding to the first QoS to one or more QoS flows, wherein the one or more QoS flows comprise a QoS parameter of a QoS flow associated with the first QoS.

12. The method according to any one of claims 1 to 5, wherein the first network element is an AMF network element, the second network element is a first access network device, and the first information comprises one or more of following information:
a QoS processing policy for a QoS flow associated with the first QoS;
a QoS configuration of the first QoS;
an association identifier of a QoS configuration of the first QoS;
a candidate QoS parameter for a QoS flow associated with the first QoS; or
an identifier of one or more access network devices associated with the first QoS.

13. The method according to any one of claims 1 to 5, wherein the first network element is a first access network device, the second network element is a terminal device in the first group of terminal devices, and the first information comprises resource allocation information corresponding to the first QoS.

14. The method according to claim 13, wherein in a case that the first network element is unable to meet a QoS requirement of the first QoS, the resource allocation information corresponding to the first QoS is determined by the first network element based on a candidate QoS parameter associated with the first QoS.

15. The method according to claim 13 or 14, further comprising:
in a case that the first network element is unable to meet a QoS requirement of the first QoS, transmitting, by the first network element, first indication information to a network, wherein the first indication information is used to indicate that the QoS requirement of the first QoS fails to be met.

16. The method according to claim 15, wherein the first indication information comprises a candidate QoS parameter associated with the first QoS, which is selected by the first network element.

17. The method according to any one of claims 1 to 5, wherein the first network element is a second access network device, the second network element is a third access network device, and the first information comprises one or more of following information:
information about a resource allocated by the second access network device for a QoS flow associated with the first QoS;
information about a QoS requirement, that has been met by the second access network device, of a QoS flow associated with the first QoS;
a candidate QoS parameter used by the second access network device for a QoS flow associated with the first QoS; or
an association identifier of a QoS configuration of the first QoS.

18. The method according to any one of claims 1 to 17, wherein the first group of terminal devices comprises a plurality of terminal devices for a same task.

19. A wireless communication method, comprising:
receiving, by a second network element, first information transmitted by a first network element, wherein the first information is associated with first quality of service QoS, and the first QoS corresponds to a first group of terminal devices.

20. The method according to claim 19, wherein the first information is used to indicate one or more of following:
information for requesting the first QoS;
a QoS parameter of the first QoS;
QoS configuration information for the first QoS;
processing policy information for the first QoS;
resource allocation information corresponding to the first QoS; or
information about candidate QoS associated with the first QoS.

21. The method according to claim 19 or 20, wherein the first information comprises one or more of following:
a QoS requirement of the first QoS;
association indication information for a service flow associated with the first QoS;
a QoS parameter of the first QoS;
a QoS configuration of the first QoS;
an association identifier of a QoS configuration of the first QoS;
a QoS processing policy for the first QoS;
a policy charging control PCC rule corresponding to the first QoS;
resource allocation information corresponding to the first QoS;
a candidate QoS requirement associated with the first QoS;
a candidate QoS parameter associated with the first QoS; or
a candidate QoS configuration associated with the first QoS.

22. The method according to any one of claims 19 to 21, wherein the first information comprises a QoS parameter of the first QoS, and the QoS parameter of the first QoS is used to indicate one or more of following information:
transmission rate information corresponding to the first QoS;
delay information corresponding to the first QoS;
priority information corresponding to the first QoS; or
resource preemption information corresponding to the first QoS.

23. The method according to any one of claims 19 to 22, wherein a QoS parameter of the first QoS comprises one or more of following parameters:
a group transmission rate for indicating a transmission rate of the first QoS;
a group maximum transmission rate for indicating a maximum transmission rate that a network allows for the first QoS;
a group packet delay budget for indicating a delay budget corresponding to the first QoS; or
a group allocation and retention priority for indicating an allocation and retention priority corresponding to the first QoS.

24. The method according to any one of claims 19 to 23, wherein the first network element is an application function AF network element, the second network element is a policy control function PCF network element, and the first information comprises one or more of following information:
a QoS requirement of the first QoS;
association indication information for a service flow associated with the first QoS;
a QoS processing policy for a service flow associated with the first QoS;
a candidate QoS requirement associated with the first QoS.

25. The method according to claim 24, further comprising one or more of following:
generating, by the second network element based on a QoS requirement of the first QoS, a QoS parameter for a service flow associated with the first QoS;
determining, by the second network element based on the QoS processing policy for the first QoS, a policy for updating the second network element; or
generating, by the second network element based on a candidate QoS requirement for the first QoS, a candidate QoS parameter for a service flow associated with the first QoS.

26. The method according to any one of claims 19 to 23, wherein the first network element is a PCF network element, the second network element is a session management function SMF network element, and the first information comprises one or more of following information:
association indication information for a service flow associated with the first QoS;
a QoS parameter for a service flow associated with the first QoS;
a QoS processing policy for a service flow associated with the first QoS;
a candidate QoS parameter for a service flow associated with the first QoS; or
a PCC rule corresponding to the first QoS.

27. The method according to claim 26, wherein at least one of the QoS parameter for the service flow associated with the first QoS or the QoS processing policy for the service flow associated with the first QoS is comprised in a PCC rule corresponding to the first QoS.

28. The method according to claim 26 or 27, further comprising:
binding, by the second network element, a PCC rule corresponding to the first QoS to one or more QoS flows, wherein the one or more QoS flows comprise a QoS parameter for a QoS flow associated with the first QoS.

29. The method according to any one of claims 19 to 23, wherein the first network element is an SMF network element, the second network element is an access and mobility management function AMF network element, and the first information comprises one or more of following information:
a QoS processing policy for a QoS flow associated with the first QoS;
a QoS configuration of the first QoS;
an association identifier of a QoS configuration of the first QoS; or
a candidate QoS configuration associated with the first QoS.

30. The method according to any one of claims 19 to 23, wherein the first network element is an AMF network element, the second network element is a first access network device, and the first information comprises one or more of following information:
a QoS processing policy for a QoS flow associated with the first QoS;
a QoS configuration of the first QoS;
an association identifier of a QoS configuration of the first QoS;
a candidate QoS parameter for a QoS flow associated with the first QoS; or
an identifier of one or more access network devices associated with the first QoS.

31. The method according to claim 30, wherein in a case that the second network element is unable to meet a QoS requirement of the first QoS, resource allocation information corresponding to the first QoS is determined by the second network element based on a candidate QoS parameter associated with the first QoS.

32. The method according to claim 30 or 31, further comprising:
in a case that the second network element is unable to meet a QoS requirement of the first QoS, transmitting, by the second network element, first indication information to a network, wherein the first indication information is used to indicate that the QoS requirement of the first QoS fails to be met.

33. The method according to claim 32, wherein the first indication information comprises a candidate QoS parameter for the first QoS, which is selected by the first network element.

34. The method according to any one of claims 19 to 23, wherein the first network element is a first access network device, the second network element is a terminal device in the first group of terminal devices, and the first information comprises resource allocation information corresponding to the first QoS.

35. The method according to any one of claims 19 to 23, wherein the first network element is a second access network device, the second network element is a third access network device, and the first information comprises one or more of following information:
information about a resource allocated by the second access network device for a QoS flow associated with the first QoS;
information about a QoS requirement, that has been met by the second access network device, of a QoS flow associated with the first QoS;
a candidate QoS parameter used by the second access network device for a QoS flow associated with the first QoS; or
an association identifier of a QoS configuration of the first QoS.

36. The method according to any one of claims 19 to 35, wherein the first group of terminal devices comprises a plurality of terminal devices for a same task.

37. A network element, wherein the network element is a first network element, and the first network element comprises:
a first transmitting module, configured to transmit first information to a second network element, wherein the first information is associated with first quality of service QoS, and the first QoS corresponds to a first group of terminal devices.

38. The network element according to claim 37, wherein the first information is used to indicate one or more of following:
information for requesting the first QoS;
a QoS parameter of the first QoS;
QoS configuration information for the first QoS;
processing policy information for the first QoS;
resource allocation information corresponding to the first QoS; or
information about candidate QoS associated with the first QoS.

39. The network element according to claim 37 or 38, wherein the first information comprises one or more of following:
a QoS requirement of the first QoS;
association indication information for a service flow associated with the first QoS;
a QoS parameter of the first QoS;
a QoS configuration of the first QoS;
an association identifier of a QoS configuration of the first QoS;
a QoS processing policy for the first QoS;
a policy charging control PCC rule corresponding to the first QoS;
resource allocation information corresponding to the first QoS;
a candidate QoS requirement associated with the first QoS;
a candidate QoS parameter associated with the first QoS; or
a candidate QoS configuration associated with the first QoS.

40. The network element according to any one of claims 37 to 39, wherein the first information comprises a QoS parameter of the first QoS, and the QoS parameter of the first QoS is used to indicate one or more of following information:
transmission rate information corresponding to the first QoS;
delay information corresponding to the first QoS;
priority information corresponding to the first QoS; or
resource preemption information corresponding to the first QoS.

41. The network element according to any one of claims 37 to 40, wherein a QoS parameter of the first QoS comprises one or more of following parameters:
a group transmission rate for indicating a transmission rate of the first QoS;
a group maximum transmission rate for indicating a maximum transmission rate that a network allows for the first QoS;
a group packet delay budget for indicating a delay budget corresponding to the first QoS; or
a group allocation and retention priority for indicating an allocation and retention priority corresponding to the first QoS.

42. The network element according to any one of claims 37 to 41, wherein the first network element is an application function AF network element, the second network element is a policy control function PCF network element, and the first information comprises one or more of following information:
a QoS requirement of the first QoS;
association indication information for a service flow associated with the first QoS;
a QoS processing policy for a service flow associated with the first QoS;
a candidate QoS requirement associated with the first QoS.

43. The network element according to any one of claims 37 to 41, wherein the first network element is a PCF network element, the second network element is a session management function SMF network element, and the first information comprises one or more of following information:
association indication information for a service flow associated with the first QoS;
a QoS parameter for a service flow associated with the first QoS;
a QoS processing policy for a service flow associated with the first QoS;
a candidate QoS parameter for a service flow associated with the first QoS; or
a PCC rule corresponding to the first QoS.

44. The network element according to claim 43, wherein the first network element further comprises one or more of following:
a first generation module, configured to generate, based on a QoS requirement of the first QoS, a QoS parameter for a service flow associated with the first QoS;
a determining module, configured to determine, based on the QoS processing policy for the service flow associated with the first QoS, a policy for updating the second network element; or
a second generation module, configured to generate, based on a candidate QoS requirement associated with the first QoS, a candidate QoS parameter for a service flow associated with the first QoS.

45. The network element according to claim 43 or 44, wherein at least one of the QoS parameter for the service flow associated with the first QoS or the QoS processing policy for the service flow associated with the first QoS is comprised in a PCC rule corresponding to the first QoS.

46. The network element according to any one of claims 37 to 41, wherein the first network element is an SMF network element, the second network element is an access and mobility management function AMF network element, and the first information comprises one or more of following information:
a QoS processing policy for a QoS flow associated with the first QoS;
a QoS configuration of the first QoS;
an association identifier of a QoS configuration of the first QoS;
a candidate QoS configuration associated with the first QoS.

47. The network element according to claim 46, wherein the first network element further comprises:
a binding module, configured to bind a PCC rule corresponding to the first QoS to one or more QoS flows, wherein the one or more QoS flows comprise a QoS parameter for a QoS flow associated with the first QoS.

48. The network element according to any one of claims 37 to 41, wherein the first network element is an AMF network element, the second network element is a first access network device, and the first information comprises one or more of following information:
a QoS processing policy for a QoS flow associated with the first QoS;
a QoS configuration of the first QoS;
an association identifier of a QoS configuration of the first QoS;
a candidate QoS parameter for a QoS flow associated with the first QoS; or
an identifier of one or more access network devices associated with the first QoS.

49. The network element according to any one of claims 37 to 41, wherein the first network element is a first access network device, the second network element is a terminal device in the first group of terminal devices, and the first information comprises resource allocation information corresponding to the first QoS.

50. The network element according to claim 49, wherein in a case that the first network element is unable to meet a QoS requirement of the first QoS, the resource allocation information corresponding to the first QoS is determined by the first network element based on a candidate QoS parameter associated with the first QoS.

51. The network element according to claim 49 or 50, wherein the first network element further comprises:
a second transmitting module, configured to: in a case that the first network element is unable to meet a QoS requirement of the first QoS, transmit first indication information to a network, wherein the first indication information is used to indicate that the QoS requirement of the first QoS fails to be met.

52. The network element according to claim 51, wherein the first indication information comprises a candidate QoS parameter associated with the first QoS, which is selected by the first network element.

53. The network element according to any one of claims 37 to 41, wherein the first network element is a second access network device, the second network element is a third access network device, and the first information comprises one or more of following information:
information about a resource allocated by the second access network device for a QoS flow associated with the first QoS;
information about a QoS requirement, that has been met by the second access network device, of a QoS flow associated with the first QoS;
a candidate QoS parameter used by the second access network device for a QoS flow associated with the first QoS; or
an association identifier of a QoS configuration of the first QoS.

54. The network element according to any one of claims 37 to 53, wherein the first group of terminal devices comprises a plurality of terminal devices for a same task.

55. A network element, wherein the network element is a second network element, and the second network element comprises:
a receiving module, configured to receive first information transmitted by a first network element, wherein the first information is associated with first quality of service QoS, and the first QoS corresponds to a first group of terminal devices.

56. The network element according to claim 55, wherein the first information is used to indicate one or more of following:
information for requesting the first QoS;
a QoS parameter of the first QoS;
QoS configuration information for the first QoS;
processing policy information for the first QoS;
resource allocation information corresponding to the first QoS; or
information about candidate QoS associated with the first QoS.

57. The network element according to claim 55 or 56, wherein the first information comprises one or more of following:
a QoS requirement of the first QoS;
association indication information for a service flow associated with the first QoS;
a QoS parameter of the first QoS;
a QoS configuration of the first QoS;
an association identifier of a QoS configuration of the first QoS;
a QoS processing policy for the first QoS;
a policy charging control PCC rule corresponding to the first QoS;
resource allocation information corresponding to the first QoS;
a candidate QoS requirement associated with the first QoS;
a candidate QoS parameter associated with the first QoS; or
a candidate QoS configuration associated with the first QoS.

58. The network element according to any one of claims 55 to 57, wherein the first information comprises a QoS parameter of the first QoS, and the QoS parameter of the first QoS is used to indicate one or more of following information:
transmission rate information corresponding to the first QoS;
delay information corresponding to the first QoS;
priority information corresponding to the first QoS; or
resource preemption information corresponding to the first QoS.

59. The network element according to any one of claims 55 to 58, wherein a QoS parameter of the first QoS comprises one or more of following parameters:
a group transmission rate for indicating a transmission rate of the first QoS;
a group maximum transmission rate for indicating a maximum transmission rate that a network allows for the first QoS;
a group packet delay budget for indicating a delay budget corresponding to the first QoS; or
a group allocation and retention priority for indicating an allocation and retention priority corresponding to the first QoS.

60. The network element according to any one of claims 55 to 59, wherein the first network element is an application function AF network element, the second network element is a policy control function PCF network element, and the first information comprises one or more of following information:
a QoS requirement of the first QoS;
association indication information for a service flow associated with the first QoS;
a QoS processing policy for a service flow associated with the first QoS;
a candidate QoS requirement associated with the first QoS.

61. The network element according to claim 60, wherein the second network element further comprises one or more of following:
a first generation module, configured to generate, based on a QoS requirement of the first QoS, a QoS parameter for a service flow associated with the first QoS;
a determining module, configured to determine, based on the QoS processing policy for the first QoS, a policy for updating the second network element; or
a second generation module, configured to generate, based on a candidate QoS requirement of the first QoS, a candidate QoS parameter for a service flow associated with the first QoS.

62. The network element according to any one of claims 55 to 59, wherein the first network element is a PCF network element, the second network element is a session management function SMF network element, and the first information comprises one or more of following information:
association indication information for a service flow associated with the first QoS;
a QoS parameter for a service flow associated with the first QoS;
a QoS processing policy for a service flow associated with the first QoS;
a candidate QoS parameter for a service flow associated with the first QoS; or
a PCC rule corresponding to the first QoS.

63. The network element according to claim 62, wherein at least one of the QoS parameter for the service flow associated with the first QoS or the QoS processing policy for the service flow associated with the first QoS is comprised in a PCC rule corresponding to the first QoS.

64. The network element according to claim 62 or 63, wherein the second network element further comprises:
a binding module, configured to bind a PCC rule corresponding to the first QoS to one or more QoS flows, wherein the one or more QoS flows comprise a QoS parameter of a QoS flow associated with the first QoS.

65. The network element according to any one of claims 55 to 59, wherein the first network element is an SMF network element, the second network element is an access and mobility management function AMF network element, and the first information comprises one or more of following information:
a QoS processing policy for a QoS flow associated with the first QoS;
a QoS configuration of the first QoS;
an association identifier of a QoS configuration of the first QoS; or
a candidate QoS configuration associated with the first QoS.

66. The network element according to any one of claims 55 to 59, wherein the first network element is an AMF network element, the second network element is a first access network device, and the first information comprises one or more of following information:
a QoS processing policy for a QoS flow associated with the first QoS;
a QoS configuration of the first QoS;
an association identifier of a QoS configuration of the first QoS;
a candidate QoS parameter for a QoS flow associated with the first QoS; or
an identifier of one or more access network devices associated with the first QoS.

67. The network element according to claim 66, wherein in a case that the second network element is unable to meet a QoS requirement of the first QoS, the resource allocation information corresponding to the first QoS is determined by the second network element based on a candidate QoS parameter associated with the first QoS.

68. The network element according to claim 66 or 67, wherein the second network element further comprises:
a transmitting module, configured to: in a case that the second network element is unable to meet a QoS requirement of the first QoS, transmit first indication information to a network, wherein the first indication information is used to indicate that the QoS requirement of the first QoS fails to be met.

69. The network element according to claim 68, wherein the first indication information comprises a candidate QoS parameter for the first QoS, which is selected by the first network element.

70. The network element according to any one of claims 55 to 59, wherein the first network element is a first access network device, the second network element is a terminal device in the first group of terminal devices, and the first information comprises resource allocation information corresponding to the first QoS.

71. The network element according to any one of claims 55 to 59, wherein the first network element is a second access network device, the second network element is a third access network device, and the first information comprises one or more of following information:
information about a resource allocated by the second access network device for a QoS flow associated with the first QoS;
information about a QoS requirement, that has been met by the second access network device, of a QoS flow associated with the first QoS;
a candidate QoS parameter used by the second access network device for a QoS flow associated with the first QoS; or
an association identifier of a QoS configuration of the first QoS.

72. The network element according to any one of claims 55 to 59, wherein the first group of terminal devices comprises a plurality of terminal devices for a same task.

73. A network element, comprising a memory, a processor, and a transceiver, wherein the memory is configured to store a program, and the processor is configured to invoke the program in the memory, to cause the network element to execute the method according to any one of claims 1 to 36.

74. An apparatus, comprising a processor configured to invoke a program from a memory, to cause the apparatus to execute the method according to any one of claims 1 to 36.

75. A chip, comprising a processor, configured to invoke a program from a memory to cause a device on which the chip is installed to execute the method according to any one of claims 1 to 36.

76. A computer-readable storage medium, wherein the computer-readable storage medium stores a program, and the program causes a computer to execute the method according to any one of claims 1 to 36.

77. A computer program product, comprising a program that causes a computer to execute the method according to any one of claims 1 to 36.

78. A computer program, wherein the computer program causes a computer to execute the method according to any one of claims 1 to 36.
